(19) Europäisches Patentamt
European Patent Office
Office européen des brevets

(11) EP 2 977 427 B1

(12) **EUROPEAN PATENT SPECIFICATION**

(45) Date of publication and mention of the grant of the patent:
**20.06.2018 Bulletin 2018/25**

(21) Application number: **13878769.2**

(22) Date of filing: **21.03.2013**

(51) Int Cl.:
***C09K 19/42*** *(2006.01)*
***G02F 1/13*** *(2006.01)*
***C09K 19/12*** *(2006.01)*
***C09K 19/30*** *(2006.01)*
***C09K 19/34*** *(2006.01)*
***C09K 19/52*** *(2006.01)*
***C09K 19/44*** *(2006.01)*

(86) International application number:
**PCT/JP2013/058099**

(87) International publication number:
**WO 2014/147792 (25.09.2014 Gazette 2014/39)**

(54) **LIQUID CRYSTAL COMPOSITION AND LIQUID CRYSTAL DISPLAY DEVICE USING SAME**

FLÜSSIGKRISTALLZUSAMMENSETZUNG UND FLÜSSIGKRISTALLANZEIGEVORRICHTUNG DAMIT

COMPOSITION À BASE DE CRISTAUX LIQUIDES ET DISPOSITIF D'AFFICHAGE À BASE DE CRISTAUX LIQUIDES L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.01.2016 Bulletin 2016/04**

(73) Proprietor: **DIC Corporation**
**Tokyo 174-8520 (JP)**

(72) Inventors:
- **IWASHITA, Yoshinori**
**Kitaadachi-gun**
**Saitama 362-8577 (JP)**
- **NIWA, Masahiro**
**Kitaadachi-gun**
**Saitama 362-8577 (JP)**
- **OGAWA, Shinji**
**Kitaadachi-gun**
**Saitama 362-8577 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**EP-A1- 2 607 451**
**EP-A1- 2 824 161**
**EP-A1- 2 855 628**
**EP-A1- 2 871 225**
**EP-A1- 2 931 836**
**WO-A1-2011/148928**
**JP-A- 2009 084 362**
**JP-A- 2013 047 327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 977 427 B1

## Description

Technical Field

The present invention relates to a liquid crystal composition and a liquid crystal display element that are useful as constitutional parts of liquid crystal display devices and the like.

Background Art

Liquid crystal display elements have come to be used in watches, calculators, various measurement instruments, automobile panels, word processors, electronic organizers, printers, computers, televisions, clocks, advertising boards, etc. Representative examples of liquid crystal display modes are twisted nematic (TN) mode, super twisted nematic (STN) mode, and vertical alignment (VA) or in-plane-switching (IPS) mode that uses thin film transistors (TFTs) The liquid crystal compositions used in these liquid crystal display elements are required to be stable against external factors such as moisture, air, heat, and light, exhibit a liquid crystal phase in a temperature range as wide as possible around room temperature, have low viscosity, and operate at low drive voltage. The liquid crystal compositions are composed of several to dozens of compounds in order to optimize dielectric anisotropy ($\Delta\varepsilon$) and/or refractive index anisotropy ($\Delta n$) for each individual display element.

A liquid crystal composition having a negative $\Delta\varepsilon$ is used in vertical alignment mode displays which are widely used in liquid crystal televisions and the like. Meanwhile, low-voltage driving, high-speed response, and a wide operation temperature range are required in all drive modes. In other words, $\Delta\varepsilon$ is preferably positive and has a large absolute value, viscosity ($\eta$) is preferably small, and the nematic phase-isotropic liquid phase transition temperature ($T_{ni}$) is preferably high. There is also a need to adjust $\Delta n$ of the liquid crystal composition to be in an appropriate range suitable for a cell gap (d) so as to meet the setting of $\Delta n \times d$, which is the product of $\Delta n$ and the cell gap. Furthermore, if the liquid crystal display element is to be applied to televisions and the like, high-speed response is critical and thus a liquid crystal composition with a small $\gamma_1$ is desirable.

Conventionally, it has been a common practice to use a compound having a dialkyl bicyclohexane skeleton in order to design a liquid crystal composition with a small $\gamma_1$ (refer to PTL 1). However, bicyclohexane compounds generally have high vapor pressure although they are highly effective for decreasing $\gamma_1$ and this tendency intensifies with compounds having short alkyl chains. Since $T_{ni}$ also tends to be low, alkyl bicyclohexane compounds having a total of seven or more carbon atoms in the side chains have been mostly used and compounds with short side chains have not been fully investigated.

As the usage of liquid crystal display elements expands, large changes have been seen in the methods of using and producing the elements. In order to meet such changes, optimization of properties other than the basic physical property values commonly known has been necessitated. That is, liquid crystal display elements that use liquid crystal compositions are now being widely used in vertical alignment (VA) or in-plane-switching (IPS) mode devices and super large size display elements of 50 or more are now put to into practical application. As the substrate size increases, the mainstream method for injecting a liquid crystal composition into a substrate has shifted from a conventional vacuum injection method to a one-drop-fill (ODF) method (refer to PTL 2), and this led to a problem of display quality degradation caused by drop marks that occur as the liquid crystal composition is dropped onto the substrate. This issue is particularly severe in polymer stabilized (PS) liquid crystal display elements and polymer sustained alignment (PSA) liquid crystal display elements that have been developed to create a pretilt angle for a liquid crystal material in the liquid crystal display element and increase response speed (refer to PTL 3). In other words, in these display elements, a monomer is added to the liquid crystal composition and the monomer in the composition is allowed to cure. A liquid crystal composition for an active matrix is required to maintain high voltage holding ratio and can only use particular compounds, and use of compounds having ester bonds therein is limited. Monomers used in PSA liquid crystal display elements are mostly acrylate-based and have ester bonds therein, and such compounds are usually not used as liquid crystal compounds for an active matrix (refer to PTL 3). Such foreign matter induces occurrence of drop marks, and degradation of the yield of liquid crystal display elements due to display defects has become an issue. Degradation of yield arises as an issue also when additives such as an antioxidant and light absorber are added to the liquid crystal composition.

Herein, drop marks are defined as a phenomenon in which the trace of dropping a liquid crystal composition appears white when black display is performed.

A method for suppressing drop marks has been disclosed (PTL 4) in which drop marks occurring in association with an alignment control film is suppressed by polymerizing a polymerizable compound in a liquid crystal composition to thereby form a polymer layer in the liquid crystal phase. However, according to this method, ghosting resulting from the polymerizable compound added to the liquid crystal arises as an issue and the effect of suppressing drop marks is insufficient. Thus, development of a liquid crystal display element that maintains basic properties of liquid crystal display elements while reducing occurrence of ghosting and drop marks has been awaited.

PTL 5 provides a liquid crystal composition satisfying at least one of characteristics such as a high maximum temperature of a nematic phase, a low minimum temperature of the nematic phase, a small viscosity, a large optical anisotropy, a large positive dielectric anisotropy, a large specific resistance, a high stability to ultraviolet light and to heat, or having a suitable balance regarding at least two of the characteristics.

PTL 6 provides a liquid crystal composition, which has negative dielectric anisotropy, high-speed response, and excellent light resistance and low-temperature stability and is suitably used for a liquid crystal television.

PTL 7 provides a liquid crystal composition that fulfills at least one property or has an appropriate balance for at least two properties in properties of a high upper limit temperature of a nematic phase, a low limit temperature of a nematic phase, a small viscosity, an appropriate optical anisotropy, a negatively large dielectric anisotropy, a large specific resistance, a high stability to ultraviolet, a high stability to heat or the like.

PTL 8 discloses a liquid crystal composition in which various characteristics of a liquid crystal display element such as a dielectric anisotropy, a viscosity, a nematic phase upper limit temperature, and a burn-in characteristic of a display element are not deteriorated.

PTL 9 relates to a liquid crystal (LC) medium, to its use for optical, electro-optical and electronic purposes, in particular in LC displays, especially in LC displays of the PS ("polymer sustained") or PSA ("polymer sustained alignment") type, and to LC displays, especially PS or PSA displays, comprising said LC medium.

PTL 10 provides a liquid crystal composition that includes a polymerizable compound and satisfies at least one of characteristics such as a high maximum temperature, a low minimum temperature, a small viscosity, a suitable optical anisotropy, a large negative dielectric anisotropy and a large specific resistance.

PTL 11 discloses that a liquid-crystalline medium comprises at least one substituted phenyl derivative (I)

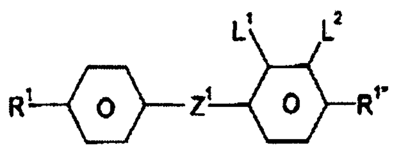

I

.

PTL 12 relates to the compounds of the formula I and to a liquid-crystalline medium based on a mixture of polar compounds which contains at least one compound of the formula I

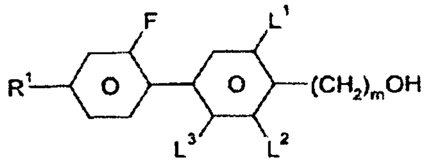

I

.

Citation List

Patent Literature

PTL 1: Japanese Unexamined Patent Application Publication (Translation of PCT Application) No. 2008-505235

PTL 2: Japanese Unexamined Patent Application Publication No. 6-235925

PTL 3: Japanese Unexamined Patent Application Publication No. 2002-357830

PTL 4: Japanese Unexamined Patent Application Publication No. 2006-58755

PTL 5: WO 2011/148928 A1

PTL 6: JP 2009 084362 A

PTL 7: JP 2013 047 327 A

PTL 8: EP 2 824 161 A1

PTL 9: EP 2 855 628 A1

PTL 10: EP 2 871 225 A1

PTL 11: EP 2 607 451 A1

PTL 12: EP 2 931 836 A1

Summary of Invention

Technical Problem

An object of the present invention is to provide a liquid crystal composition suitable for use in a liquid crystal display element that suffers less from drop marks that occur during production without degrading ghosting properties of the display element and various properties of the liquid crystal display element, such as dielectric anisotropy, viscosity, nematic phase upper limit temperature, low-temperature nematic phase stability, and $\gamma_1$, with which a stable amount of a liquid crystal material can be discharged in an ODF process. A liquid crystal display element that uses the liquid crystal composition is also provided. Solution to Problem

In order to achieve the object, the inventors of the present invention have studied configurations of various liquid crystal compositions most suitable for fabrication of liquid crystal display elements by ODF methods and found that occurrence of drop marks in liquid crystal display elements can be suppressed by using particular liquid crystal compounds at a particular mixing ratio. Thus, the present invention has been made.

The present invention provides a liquid crystal composition having negative dielectric anisotropy, comprising a compound represented by formula (I), two or more compounds represented by general formula (II), a compound represented by general formula (III), a compound represented by the formula (V), and the compound (VI-a4),
wherein the compounds represented by general formula (II) include one or more compounds with $n^1$ representing 0 and one or more compounds with $n^1$ representing 1,
wherein the compounds represented by general formula (II) include one or more compounds represented by general formula (II-1) as the one or more compounds with $n^1$ representing 1 and one or more compounds represented by general formula (II-2) as the one or more compounds with $n^1$ representing 0:

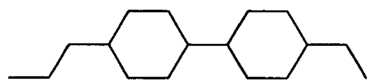 (I)

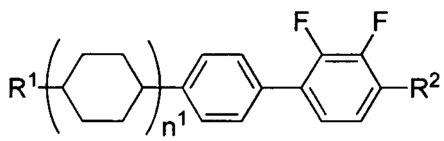 (II)

in the formula, $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; and $n^1$ represents 0 or 1;

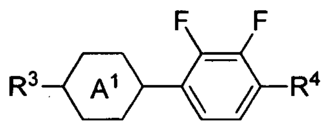 (III)

in the formula, $R^3$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $R^4$ represents an alkoxy group having 2 to 8 carbon atoms, and $A^1$ represents a 1,4-cyclohexylene group;

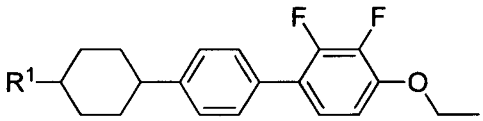

(II-1)

in the formula, $R^1$ is the same as $R^1$ in general formula (II);

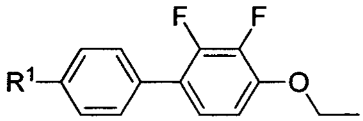

(II-2)

in the formula, $R^1$ is the same as $R^1$ in general formula (II) ;

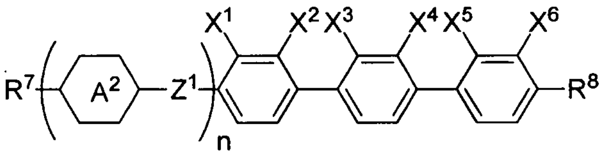

( V )

in the formula, $R^7$ and $R^8$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; at least one hydrogen atom in the alkyl, alkenyl, alkoxy, and/or alkenyloxy group may be substituted with a fluorine atom; and a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively,

$A^2$ represents a 1,4-cyclohexylene group, a 1,4-phenylene group, or a tetrahydropyran-2,5-diyl group and when $A^2$ represents a 1,4-phenylene group, the 1,4-phenylene group may have at least one hydrogen atom substituted with a fluorine atom,

$Z^1$ represents a single bond, $-OCH_2-$, $-OCF_2-$, $-CH_2O-$, or$-CF_2O-$,

n represents 0 or 1, and

$X^1$ to $X^6$ each independently represent a hydrogen atom or a fluorine atom and at least one of $X^1$ to $X^6$ represents a fluorine atom; and

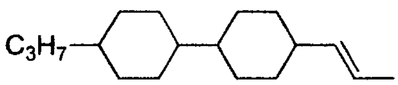

(VI-a4)

,

and a liquid crystal display element that uses the liquid crystal composition.

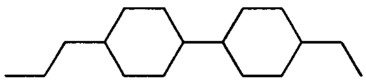

(I)

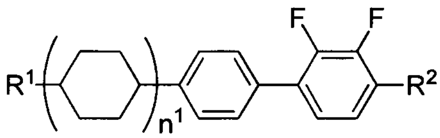

(II)

In the formula, $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; at least one hydrogen atom in the alkyl, alkenyl, alkoxy, and/or alkenyloxy group may be substituted with a fluorine atom; a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively; and $n^1$ represents 0 or 1.

Advantageous Effects of Invention

The liquid crystal display element of the present invention has excellent high-speed responsiveness and causes less ghosting. Moreover, occurrence of drop marks owing to the production process is less frequent. Thus, the liquid crystal display element is useful for display elements such as liquid crystal televisions and monitors.

Brief Description of Drawings

[Fig. 1] Fig. 1 is a diagram of an example of a structure of a liquid crystal display element of the present invention.
[Fig. 2] Fig. 2 is a diagram of an example of a structure of an inverse-staggered thin film transistor.

Reference Signs List

1 polarizer
2 substrate
3 transparent electrode or transparent electrode with an active device
4 alignment film
5 liquid crystal
11 gate electrode
12 anodized film
13 gate insulating layer
14 transparent electrode
15 drain electrode
16 ohmic contact layer
17 semiconductor layer
18 protective film
19a source electrode 1
19b source electrode 2
100 substrate
101 protective layer

Description of Embodiments

As mentioned above, the process through which drop marks occur is not exactly clear at the present. However, it is highly likely that the interaction between an alignment film and impurities in liquid crystal compounds, and a chromatogram phenomenon and the like are involved, for example. Impurities in a liquid crystal compound are strongly affected by the compound production process. The method for producing compounds is not necessarily the same if the only difference is the number of carbon atoms in the side chains. In other words, since a liquid crystal compound is prepared through a precision production process, the cost therefor is high for chemical products and improvements in production efficiency are strongly demanded. Thus, it is efficient in some cases to conduct production from a totally different type of material in order to use an inexpensive raw material despite the fact that the only difference is the number of carbon atoms in the side chain. Accordingly, the process of producing a liquid crystal bulk material may differ from one bulk material to another. Even when the same process is employed, raw materials are different in most cases and in such cases impurities contained are frequently different from one bulk material to another. Since drop marks may occur due to trace amounts of impurities, there is a limit to suppressing occurrence of drop marks by merely purifying the bulk materials.

In contrast, there is a tendency that once the production process is established, the same method for producing a common liquid crystal bulk material is constantly used for individual bulk materials. While it is not easy to completely clarify what impurities are contained despite the current development of analytical techniques, the composition must be designed based on the assumption that a particular set of impurities is contained for an individual bulk material. The inventors of the subject application have conducted studies on the relationship between the impurities in a liquid crystal bulk material and drop marks and have empirically found that there are impurities in the composition that readily cause drop marks and those that do not. Accordingly, in order to suppress occurrence of drop marks, it is critical to use particular compounds at particular mixing ratios and the inventors have found a composition with which drop marks rarely occur.

Preferable embodiments described below have been based on the above-described findings.

A liquid crystal composition according to the present invention contains, as a first component, a compound represented by formula (I). The lower limit of the compound (I) content in the liquid crystal composition is preferably 3% by mass, more preferably 5% by mass, yet more preferably 7% by mass, yet more preferably 10% by mass, and most preferably 15% by mass. The upper limit is preferably 35% by mass, more preferably 30% by mass, yet more preferably 25% by mass, and most preferably 20% by mass. More specifically, the content is preferably 15% to 35% by mass and more preferably 15 to 30% by mass if high response speed is important. The content is preferably 10% by mass to 15% by mass if drive voltage is important.

The liquid crystal composition contains, as a second component, at least one compound represented by general formula (II) with $n^1$ representing 0 and at least one compounds represented by general formula (II) with $n^1$ representing 1. The lower limit of the content of the compound represented by general formula (II) in the liquid crystal composition is preferably 27% by mass, more preferably 25% by mass, and most preferably 30% by mass. The upper limit is preferably 40% by mass, more preferably 35% by mass, and most preferably 32% by mass.

In general formula (II), $R^1$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, but preferably represents an alkyl group having 1 to 8 carbon atoms or an alkenyl group having 2 to 8 carbon atoms, more preferably represents an alkyl group having 1 to 8 carbon atoms, yet more preferably represents an alkyl group having 2 to 5 carbon atoms, and most preferably represents an alkyl group having 2 or 3 carbon atoms. $R^1$ is preferably linear.

In general formula (II), $R^2$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, but preferably represents an alkyl group having 1 to 8 carbon atoms or an alkoxy group having 1 to 8 carbon atoms, more preferably represents an alkyl group having 1 to 5 carbon atoms or an alkoxy group having 1 to 4 carbon atoms, and yet more preferably represents an alkoxy group having 1 to 4 carbon atoms. $R^2$ is preferably linear. $R^2$ yet more preferably represents an alkoxy group having 2 or 3 carbon atoms and most preferably represents an alkoxy group having 2 carbon atoms.

An alkenyl group is preferable when improvement of response speed of a display element is important and an alkyl group is preferable when reliability such as voltage holding ratio and the like is important. Preferable examples of the alkenyl group are the structures represented by the following formulae (i) to (iv):

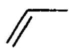 (i) 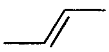 (ii) 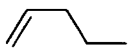 (iii) 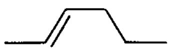 (iv)

In formulae, the right end is to be bonded to a ring structure.

In the case where the liquid crystal composition of the subject invention is to contain a reactive monomer, the structures represented by formula (ii) and (iv) are preferable and the structure represented by formula (ii) is more preferable.

Among compounds represented by general formula (II), the compound with $n^1$ representing 1 is a compound represented by general formula (II-1):

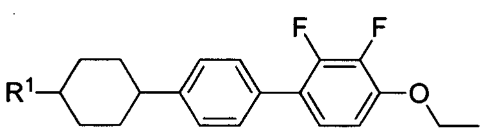 (II-1)

In the formula, $R^1$ is the same as $R^1$ in general formula (I). Specifically, compounds represented by formulae (II-1a) to (II-1d) below are preferable:

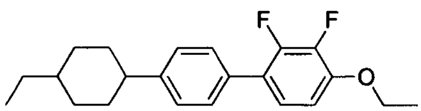 (II-1a) 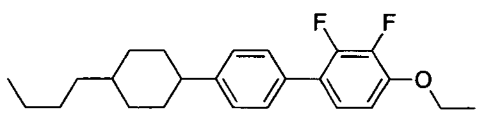 (II-1c)

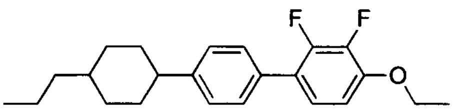 (II-1b) 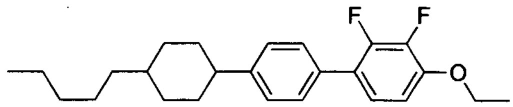 (II-1d)

A compound represented by formula (II-1a) or (II-1b) is preferable.

When two or more compounds represented by general formula (II) with $n^1$ representing 1 are used, it is preferable to use compounds represented by formula (II-1a) and formula (II-1b) in combination. The content of the compounds represented by formula (II-1a) and formula (II-1b) is preferably 50% by mass or more, more preferably 70% by mass, yet more preferably 80% by mass, and most preferably 90% by mass or more of the amount of the compounds represented by general formula (II) with $n^1$ representing 1.

The lower limit of the content of the compounds represented by general formula (II-1) is preferably 3% by mass, more preferably 5% by mass, yet more preferably 10% by mass, and most preferably 15% by mass. The upper limit is preferably 30% by mass, more preferably 25% by mass, and most preferably 20% by mass.

The compound represented by general formula (II) with n1 representing 0 is a compound represented by general formula (II-2):

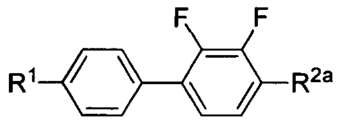 (II-2)

In the formula, $R^1$ is the same as $R^1$ in general formula (I) and $R^{2a}$ represents an alkyl group having 3 carbon atoms or an alkoxy group having 2 carbon atoms. Specifically, compounds represented by the following formulae (II-2a) to (II-2d) are preferable:

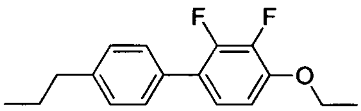 (II-2a) 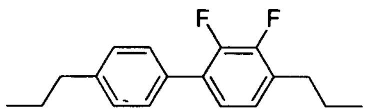 (II-2c)

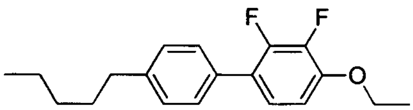 (II-2b) 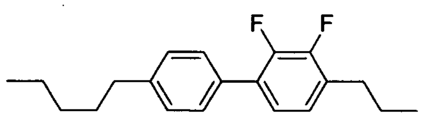 (II-2d)

A compound represented by formula (II-2a) or formula (II-2b) is preferable.

The upper limit of the content of the compound represented by general formula (11-2) is preferably 3% by mass, more preferably 5% by mass, yet more preferably 6% by mass, and most preferably 8% by mass. The upper limit is preferably 25% by mass, more preferably 20% by mass, and most preferably 15% by mass.

The liquid crystal composition of the present invention contains, as a third component, a compound represented by general formula (III).

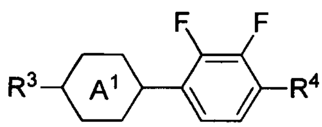 (III)

In the formula, $R^3$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $R^4$ represents an alkoxy group having 2 to 8 carbon atoms, and $A^1$ represents a 1,4-cyclohexylene group; at least one hydrogen atom in the alkyl, alkenyl, alkoxy, and/or alkenyloxy group may be substituted with a fluorine atom; a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively; and $A^1$ represents a 1,4-cyclohexylene group or a tetrahydropyran-2,5-diyl group.

The content of the compound represented by general formula (III) is preferably 3 to 30% by mass, more preferably 3 to 25% by mass, yet more preferably 5 to 20% by mass, and most preferably 8 to 15% by mass.

In general formula (III), $R^3$ represents an alkyl group having 1 to 8 carbon atoms, an alkenyl group having 2 to

8 carbon atoms, an alkoxy group having 1 to 8 carbon atoms, or an alkenyloxy group having 2 to 8 carbon atoms, preferably represents an alkyl group having 1 to 8 carbon atoms or an alkenyl group having 2 to 8 carbon atoms, more preferably represents an alkyl group having 1 to 8 carbon atoms, more preferably represents an alkyl group having 3 to 5 carbon atoms, and most preferably represents an alkyl group having 3 or 5 carbon atoms. $R^3$ is preferably linear.

In general formula (III), $R^4$ represents an alkoxy group having 2 to 8 carbon atoms, and most preferably represents an alkoxy group having 2 or 4 carbon atoms. $R^4$ is preferably linear.

An alkenyl group is preferable when improvement of response speed of the display element is important and an alkyl group is preferable when reliability such as voltage holding ratio is important. Preferable examples of the alkenyl group are structures represented by the following formula (i) to formula (iv):

[Chem. 8]

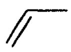 (i) 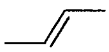 (ii) 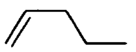 (iii) 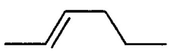 (iv)

In the formulae, the right end is to be bonded to a ring structure.

However, when the liquid crystal composition of the present invention contains a reactive monomer, the structures represented by formula (ii) and formula (iv) are preferable and the structure represented by formula (ii) is more preferable.

Although one compound represented by general formula (III) is used, it is preferable to use two or more and more preferably three or more compounds. In the case where two or more compounds represented by general formula (III) are used, it is preferable to use a combination of compounds represented by general formula (III) each with $R^3$ representing an alkyl group having 3 to 5 carbon atoms and $R^4$ representing an alkoxy group having 2 to 4 carbon atoms. When these compounds are used in combination of other compounds represented by general formula (III), the content of the compound represented by general formula (III) with $R^3$ representing an alkyl group having 3 to 5 carbon atoms and $R^4$ representing an alkoxy group having 2 to 4 carbon atoms is preferably 50% by mass or more, more preferably 70% by mass or more, yet more preferably 80% by mass or more, and most preferably 90% by mass or more of the amount of the compounds represented by general formula (III).

Preferable examples of the compounds represented by general formula (III) are specifically compounds represented by the following formula (III-1) to formula (III-4):

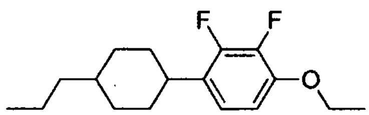

(III-1)

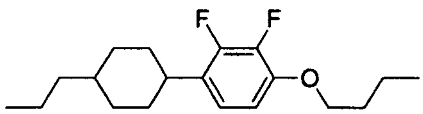

(III-2)

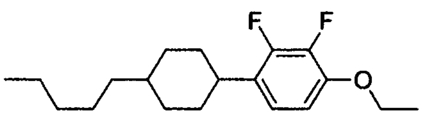

(III-3)

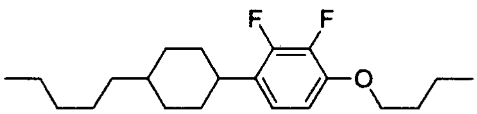

(III-4)

Compounds represented by formula (III-1) to formula (III-4) are more preferable and compounds represented by formula (III-1) and formula (III-3) are yet more preferable.

The liquid crystal composition of the present invention preferably contains, as a fourth component, a compound represented by general formula (IV).

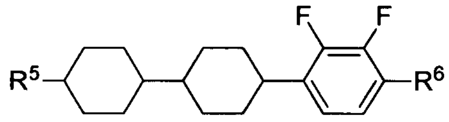

(IV)

In the formula, $R^5$ and $R^6$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; at least one hydrogen in the alkyl, alkenyl, alkoxy, and/or alkenyloxy group may be substituted with a fluorine atom; a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively.

In the case where a compound represented by general formula (IV) is contained, the content thereof is preferably 2 to 30% by mass, more preferably 2 to 20% by mass, and most preferably 7 to 15% by mass.

In general formula (IV), $R^5$ preferably represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, preferably represents an alkyl group having 1 to 8 carbon atoms or an alkenyl group having 2 to 8 carbon atoms, more preferably represents an alkyl group having 1 to 8 carbon atoms, yet more preferably represents an alkyl group having 2 to 5 carbon atoms, and most preferably represents an alkyl group having 3 to 5 carbon atoms. $R^5$ is preferably linear. In general formula (III), $R^6$ preferably represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably represents an alkyl group having 1 to 8 carbon atoms or an alkoxy group having 1 to 8 carbon atoms, yet more preferably represents an alkyl group having 1 to 5 carbon atoms or an alkoxy group having 1 to 4 carbon atoms, yet more preferably represents an alkoxy group having 1 to 4 carbon atoms, and most preferably represents an alkoxy group having 2 or 3 carbon atoms. $R^6$ is preferably linear.

An alkenyl group is preferable when improvement of response speed of the display element is important and an alkyl group is preferable when reliability such as voltage holding ratio is important. Preferable examples of the alkenyl group are structures represented by the following formula (i) to formula (iv):

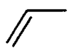 (i) 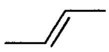 (ii) 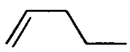 (iii) 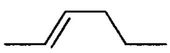 (iv)

In the formulae, the right end is to be bonded to a ring structure.

However, when the liquid crystal composition of the present invention contains a reactive monomer, the structures represented by formula (ii) and formula (iv) are preferable and the structure represented by formula (ii) is more preferable.

Preferable examples of the compound represented by general formula (IV) are specifically compounds represented by the following formula (IV-1) to (IV-6):

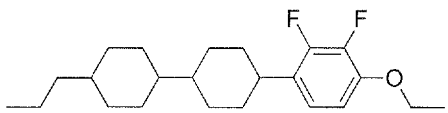

(IV-1)

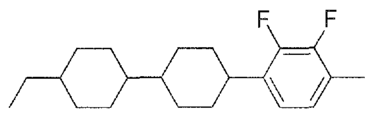

(IV-5)

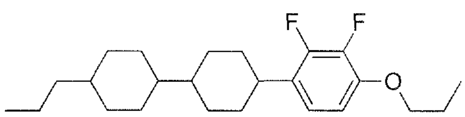

(IV-2)

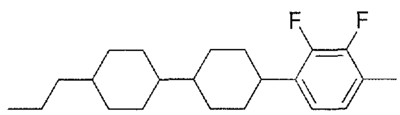

(IV-6)

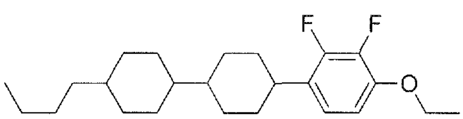

(IV-3)

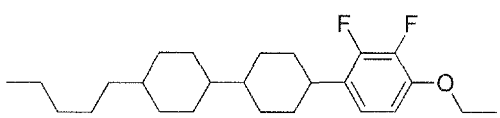

(IV-4)

Compounds represented by formula (IV-1) to formula (IV-4) are more preferable, compounds represented by formula (IV-1) to formula (IV-3) are more preferable, and compounds represented by formula (IV-1) and formula (IV-3) are most preferable.

In the case where four or more compounds represented by general formula (IV) are used, compounds represented by formula (IV-1) to formula (IV-4) are preferably used in combination. The content of the compounds represented by formula (IV-1) to formula (IV-4) is preferably 50% by mass or more, more preferably 70% by mass or more, yet more preferably 80% by mass or more, and most preferably 90% by mass or more of the amount of the compounds represented by general formula (IV).

In the case where three compounds represented by general formula (IV) are used, compounds represented by formula (IV-1) to formula (IV-3) are preferably used in combination. The content of the compounds represented by formula (IV-1) to formula (IV-3) is preferably 50% by mass or more, more preferably 70% by mass or more, yet more preferably 80% by mass or more, and most preferably 90% by mass or more of the amount of the compounds represented by general formula (IV).

In the case where two compounds represented by general formula (IV) are used, compounds represented by formula (IV-1) and formula (IV-3) are preferably used in combination. The content of the compounds represented by formula (IV-1) and formula (IV-3) is preferably 50% by mass or more, more preferably 70% by mass or more, yet more preferably 80% by mass or more, and most preferably 90% by mass or more of the amount of the compounds represented by general formula (IV).

The liquid crystal composition of the present invention contains, as a fifth component, a compound represented by general formula (V).

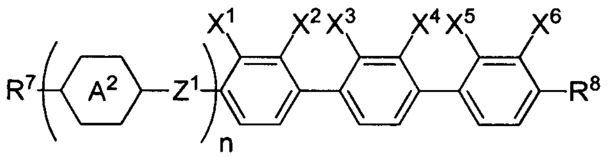

(V)

In the formula, $R^7$ and $R^8$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; at least one hydrogen atom in the alkyl, alkenyl, alkoxy, and/or alkenyloxy group may be substituted with a fluorine atom; a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively,

$A^2$ represents a 1,4-cyclohexylene group, a 1,4-phenylene group, or a tetrahydropyran-2,5-diyl group, where when $A^2$ represents a 1,4-phenylene group, at least one hydrogen atom in the 1,4-phenylene group may be substituted with fluorine, $Z^1$ represents a single bond, $-OCH_2-$, $-OCF_2-$, $-CH_2O-$, or $CF_2O-$, n represents 0 or 1, and

$X^1$ to $X^6$ each independently represent a hydrogen atom or a fluorine atom where at least two of $X^1$ to $X^6$ each represent a fluorine atom.

In the case where a compound represented by general formula (V) is to be contained, the content thereof is preferably 2 to 25% by mass, more preferably 3 to 20% by mass, and most preferably 4 to 15% by mass.

In general formula (V), $R^7$ and $R^8$ preferably each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, more preferably represent an alkyl group having 1 to 8 carbon atoms or an alkenyl group having 2 to 8 carbon atoms, yet more preferably represent an alkyl group having 1 to 8 carbon atoms, yet more preferably represent an alkyl group having 2 to 5 carbon atoms, and most preferably represent an alkyl group having 3 to 5 carbon atoms. Most preferably, the number of carbon atoms differs between $R^1$ and $R^2$, and $R^1$ and $R^2$ are preferably linear.

An alkenyl group is preferable when improvement of response speed of the display element is important and an alkyl group is preferable when reliability such as voltage holding ratio is important. Preferable examples of the alkenyl group are structures represented by the following formula (i) to formula (iv):

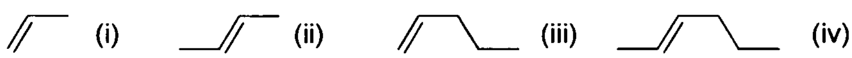

(i) (ii) (iii) (iv)

In the formulae, the right end is to be bonded to a ring structure.

However, when the liquid crystal composition of the present invention contains a reactive monomer, the structures represented by formula (ii) and formula (iv) are preferable and the structure represented by formula (ii) is more

preferable.

In general formula (V), $X^1$ to $X^6$ preferably each independently represent a hydrogen atom or a fluorine atom but preferably 1 to 5 of $X^1$ to $X^6$ each represent a fluorine atom, more preferably 1 to 4 of $X^1$ to $X^6$ each represent a fluorine atom, yet more preferably 1 to 3 of $X^1$ to $X^6$ each represent a fluorine atom, and yet more preferably one or two of $X^1$ to $X^6$ each represent a fluorine atom. Most preferably, two of $X^1$ to $X^6$ each represent a fluorine atom.

In such a case, when there is only one fluorine atom, preferably one of $X^3$ to $X^6$ and more preferably $X^3$ or $X^4$ represents a fluorine atom. When there are two fluorine atoms, preferably two of $X^3$ to $X^6$ and more preferably $X^3$ and $X^4$ or $X^5$ and $X^6$ each represent a fluorine atom, and yet more preferably $X^3$ and $X^4$ each represent a fluorine atom. When there are three or more fluorine atoms, at least $X^3$ and $X^4$ or at least $X^5$ and $X^6$ preferably each represent a fluorine atom and more preferably at least $X^3$ and $X^4$ each represent a fluorine atom.

In general formula (V), $A^2$ preferably represents a 1,4-cyclohexylene group, a 1,4-phenylene group, or a tetrahydropyran-2,5-diyl group. When response speed is important in a display element and a liquid crystal display fabricated by using the liquid crystal composition, a 1,4-phenylene group or a tetrahydropyran-2,5-diyl group is preferable and a 1,4-phenylene group is more preferable. When drive voltage is important, a 1,4-phenylene group or a tetrahydropyran-2,5-diyl group is preferable and a tetrahydropyran-2,5-diyl group is more preferable. When operation temperature range is important, that is, when a high operation temperature range is required, a 1,4-cyclohexylene group or a tetrahydropyran-2,5-diyl group is preferable and a 1,4-cyclohexylene group is more preferable. When $A^2$ represents a 1,4-phenylene group, at least one hydrogen atom in the benzene ring may be substituted with a fluorine atom. Preferably, $A^2$ is unsubstituted, monosubstituted, or disubstituted. In the case where $A^2$ is disubstituted, $A^2$ preferably represents a 2,3-difluorobenzene.

In general formula (V), $Z^1$ represents a single bond, - $OCH_2$-, -$OCF_2$-, -$CH_2O$-, or -$CF_2O$- but preferably represents a single bond, -$OCF_2$-, or -$CF_2O$-, and more preferably represents a single bond.

In general formula (V), n represents 0 or 1. When response speed is important, n preferably represents 0 and when operation temperature range is important, that is, when a high operation temperature range is required, n preferably represents 1.

Preferable examples of the compound represented by general formula (V) are specifically compounds represented by the following general formulas (V-1) to (V-15):

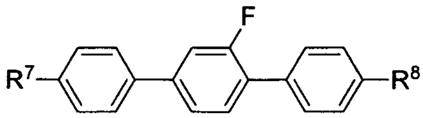 (V-1)

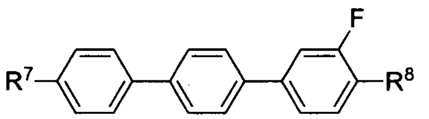 (V-2)

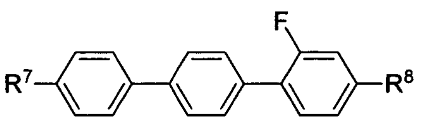 (V-3)

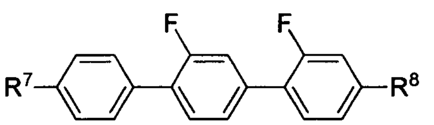 (V-4)

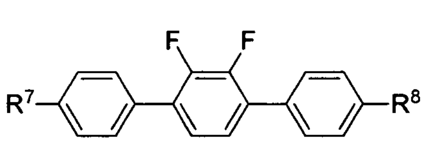 (V-5)

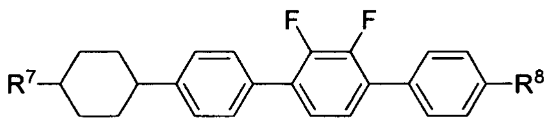 (V-10)

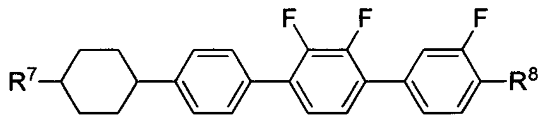 (V-11)

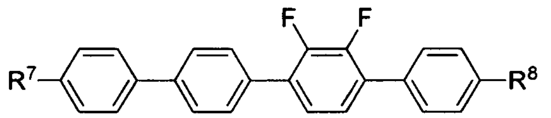 (V-12)

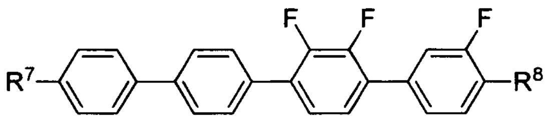 (V-13)

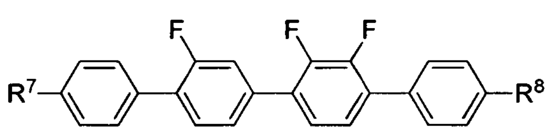 (V-14)

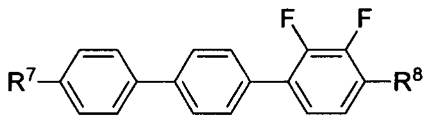 (V-6)
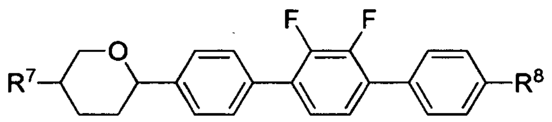 (V-15)

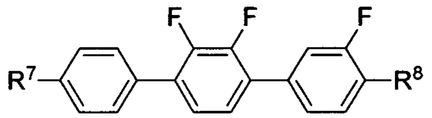 (V-7)
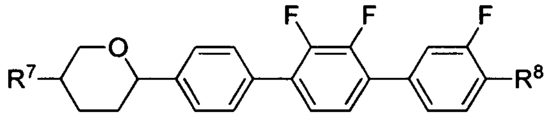 (V-16)

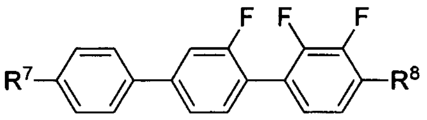 (V-8)

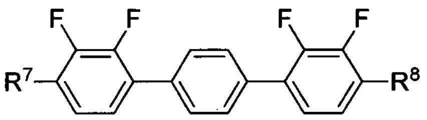 (V-9)

In the formulae, $R^7$ is the same as $R^7$ in general formula (V) and $R^8$ is the same as $R^8$ in general formula (V). However, formula (V-1), formula (V-3) to formula (V-9), and formula (V-12) to formula (V-15) are more preferable, formula (V-1), formula (V-3), formula (V-5), formula (V-6), formula (V-9), formula (V-12), and formula (V-15) are more preferable, formula (V-1), formula (V-5), and formula (V-6) are yet more preferable, and formula (V-5) is most preferable.

When a compound represented by general formula (V) is to be used, a compound represented by formula (V-5) is preferably used. The content of the compound represented by formula (V-5) is preferably 50% by mass or more, more preferably 70% by mass or more, yet more preferably 80% by mass or more, and yet more preferably 90% by mass or more of the amount of the compounds represented by general formula (V) .

In general formula (V), $R^7$ and $R^8$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, preferably represent an alkyl group having 1 to 8 carbon atoms or an alkenyl group having 2 to 8 carbon atoms, more preferably represent an alkyl group having 2 to 5 carbon atoms or an alkenyl group having 2 to 5 carbon atoms, and most preferably represent an alkyl group having 2 to 5 carbon atoms. $R^7$ and $R^8$ are preferably linear and when both $R^7$ and $R^8$ represent an alkyl group, the number of carbon atoms preferably differs between $R^7$ and $R^8$.

More specifically, a compound with $R^7$ representing a propyl group and $R^8$ representing an ethyl group, or a compound with $R^7$ representing a butyl group and $R^8$ representing an ethyl group are preferable.

The liquid crystal composition of the present invention has a wide nematic phase-isotropic liquid phase transition temperature ($T_{NI}$) range. The range is preferably 60 to 120°C more preferably 70 to 100°C, and particularly preferably 70 to 90°C

Components of the liquid crystal composition of the present invention are compounds represented by formula (I) and general formula (II). Compounds represented by general formula (III) to general formula (V) can be contained. In such a case, the contents of the compounds are preferably as follows.

The total content of the compounds represented by formula (I), general formula (II), and general formula (III) is preferably 35% by mass to 80% by mass, more preferably 40 to 70% by mass, yet more preferably 45 to 70% by mass, and particularly preferably 50% by mass to 65% by mass.

The total content of the compounds represented by formula (I), general formula (II), and general formula (IV) is preferably 40 to 80% by mass, more preferably 45 to 75% by mass, yet more preferably 50% by mass to 70% by mass, and particularly preferably 55 to 65% by mass.

The total content of the compounds represented by formula (I), general formula (II), and general formula (VI) is preferably 55 to 95% by mass, more preferably 60 to 90% by mass, yet more preferably 65% by mass to 85% by mass, and particularly preferably 70 to 80% by mass.

The total content of the compounds represented by formula (I), general formula (II), general formula (III), and general formula (IV) is preferably 50 to 95% by mass, more preferably 55 to 90% by mass, yet more preferably 60 to 80% by mass, and particularly preferably 65 to 75% by mass.

The total content of the compounds represented by formula (I), general formula (II), general formula (IV), and general formula (VI) is preferably 70 to 99% by mass, more preferably 75 to 97% by mass, yet more preferably 80 to 96% by mass, and particularly preferably 85 to 95% by mass.

The total content of the compounds represented by formula (I), general formula (II), general formula (III), general formula (IV), and general formula (VI) is preferably 85 to 100% by mass, more preferably 90 to 100% by mass, and most preferably 95 to 100% by mass.

The total content of the compounds represented by formula (I) and general formula (II) to general formula (VI) is preferably 90 to 100% by mass, more preferably 95 to 100% by mass, yet more preferably 97 to 100% by mass, and particularly preferably 98 to 100% by mass.

Among the compounds constituting the liquid crystal composition of the present invention, compounds having two or more fluorine atoms in a molecule, namely, compounds represented by general formula (II), general formula (III), and general formula (VI) and compounds represented by general formula (V) containing two or more fluorine atoms, preferably account for 40 to 70% by mass, more preferably 45 to 65% by mass, and yet more preferably 50 to 60% by mass of the liquid crystal composition. To be more specific, the total content is preferably 50% by mass to 60% by mass if response speed is important and is preferably 40 to 50% by mass if drive voltage is important.

The liquid crystal composition of the present invention may further contain a compound or compounds selected from the group consisting of compounds represented by general formula (VI-a) to general formula (VI-e).

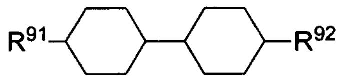
(VI-a)

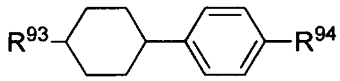
(VI-b)

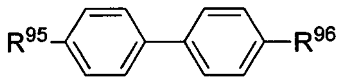
(VI-c)

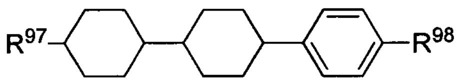
(VI-d)

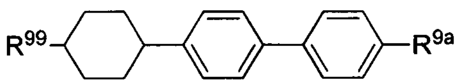
(VI-e)

In the formulae, $R^{91}$ to $R^{9a}$ each independently represent an alkyl group having 1 to 10 carbon atoms, an alkoxy group having 1 to 10 carbon atoms, or an alkenyl group having 1 to 10 carbon atoms; however, a compound represented by general formula (VI-a) with $R^{91}$ representing an alkyl group having 3 carbon atoms and $R^{92}$ representing an alkyl group having 2 carbon atoms is excluded.

When a compound or compounds selected from the group consisting of compounds represented by general formula (VIa) to general formula (VI-e) are to be contained, 1 to 10 such compounds are preferably contained, 1 to 8 such compounds are more preferably contained, 1 to 5 such compounds are yet more preferably contained, and two or more compounds are preferably contained. The content thereof in such cases is preferably 5 to 40% by mass, more preferably 5 to 35% by mass, and particularly preferably 7 to 30% by mass.

$R^{91}$ to $R^{9a}$ each independently represent an alkyl group having 1 to 10 carbon atoms, an alkenyl group having 2 to 10 carbon atoms, or an alkoxy group having 2 to 10 carbon atoms, and more preferably represent an alkyl group having 1 to 5 carbon atoms, an alkenyl group having 2 to 5 carbon atoms, or an alkoxy group having 2 to 5 carbon atoms. The alkenyl group is preferably one of the structures represented by the following formula (i) to formula (iv):

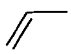 (i) 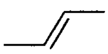 (ii) 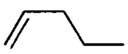 (iii) 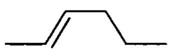 (iv)

In the formulae, the right end is to be bonded to a ring structure.

However, when the liquid crystal composition of the present invention contains a reactive monomer, the structures represented by formula (ii) and formula (iv) are preferable and the structure represented by formula (ii) is more preferable.

$R^{91}$ and $R^{92}$ may be the same or different but preferably represent different substituents.

From these points, the compounds represented by formula (VI-a) to formula (VI-e) are specifically preferably the following compounds:

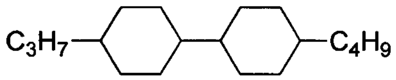 (VI-a1)

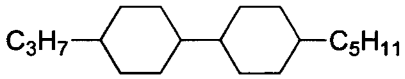 (VI-a2)

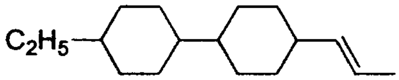 (VI-a3)

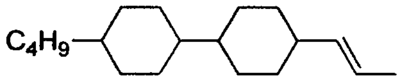 (VI-a5)

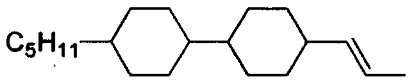 (VI-a6)

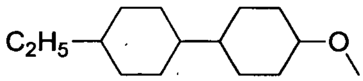 (VI-a7) 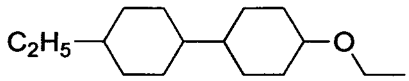 (VI-a11)

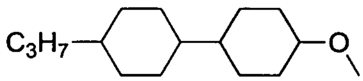 (VI-a8) 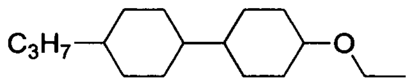 (VI-a12)

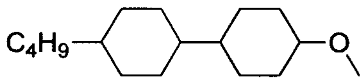 (VI-a9) 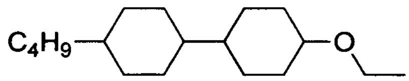 (VI-a13)

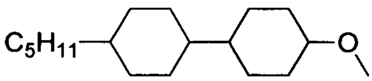 (VI-a10) 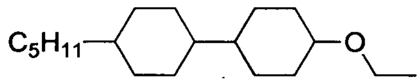 (VI-a14)

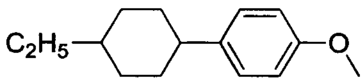 (VI-b1) 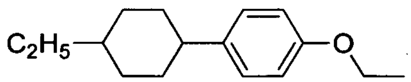 (VI-b5)

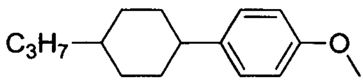 (VI-b2) 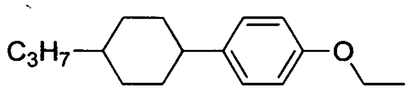 (VI-b6)

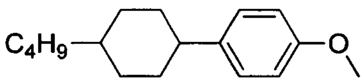 (VI-b3) 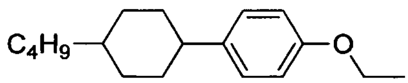 (VI-b7)

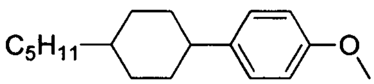 (VI-b4) 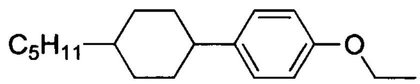 (VI-b8)

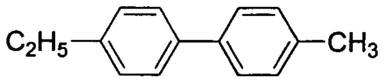 (VI-c1) 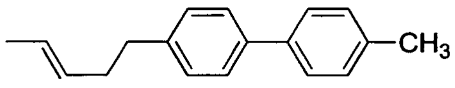 (VI-c5)

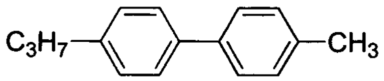 (VI-c2) 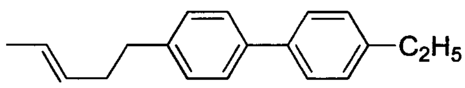 (VI-c6)

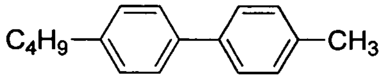 (VI-c3) 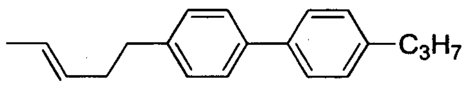 (VI-c7)

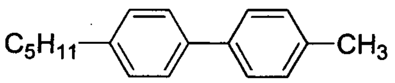 (VI-c4) 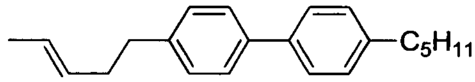 (VI-c8)

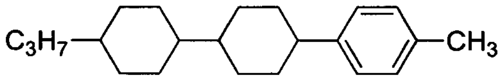 (VI-d1)

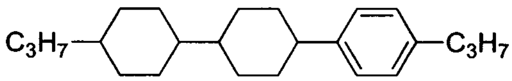 (VI-d2)

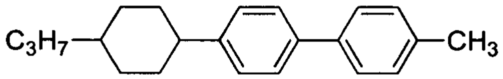 (VI-e1)

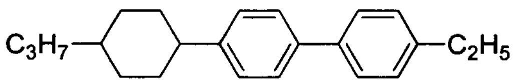 (VI-e2)

Of these, compounds represented by formula (VI-a1), formula (VI-a2), formula (VI-a3), formula (VI-a5), formula (VI-a-6), formula (VI-b2), formula (VI-b6), formula (VI-c2), formula (II-c4), formula (VI-c5), formula (VI-d1) to formula (VI-d4), and formula (VI-e2) are preferable.

The compounds represented by general formula (VI) and the compounds represented by formula (I) are common in that the dielectric anisotropy is substantially zero. The ratios of the compounds represented by formula (I) to the compounds represented by general formula (VI) are preferably adjusted so that, of the total content of the compounds represented by formula (I) and the compounds represented by general formula (VI) in the liquid crystal composition, the content of the compounds represented by formula (I) is preferably 30 to 75% by mass, more preferably 35 to 70% by mass, and most preferably 30 to 65% by mass. The total content of formula (I) and general formula (VI) is preferably 10 to 70% by mass, more preferably 15 to 65% by mass, yet more preferably 20 to 60% by mass, yet more preferably 25 to 55% by mass, and most preferably 30 to 50% by mass of the amount of the entire composition.

In the subject application, the 1,4-cyclohexyl group is preferably a trans-1,4-cyclohexyl group.

Components of the liquid crystal composition of the present invention are compounds represented by formula (I) and general formula (II). The liquid crystal composition can further contain compounds represented by general formula (III) to general formula (V) and general formula (VI-a) to general formula (VI-e). The lower limit of the total content of the compounds represented by formula (I), general formula (II) to general formula (V), and general formula (VI-a) to general formula (VI-d) in the liquid crystal composition is preferably 60% by mass, preferably 65% by mass, preferably 70% by mass, preferably 75% by mass, preferably 80% by mass, preferably 85% by mass, preferably 90% by mass, preferably 92% by mass, preferably 95% by mass, preferably 98% by mass, and preferably 99% by mass. The upper limit is preferably 100% by mass and preferably 99.5% by mass.

The content of the compounds in which all ring structures in the molecule are six-membered rings is preferably high, the content of the compounds in which all ring structures in the molecule are six-membered rings relative to the total mass of the composition is preferably 80% by mass or more, more preferably 90% by mass or more, and yet more preferably 95% by mass or more; most preferably, substantially all compounds constituting the liquid crystal composition are compounds in which all ring structures in the molecule are six-membered rings. In order to reduce degradation of the liquid crystal composition caused by oxidation, the content of the compounds having a cyclohexenylene group as a

ring structure is preferably decreased. More preferably, the content of the compounds having a cyclohexenylene group relative to the total mass of the composition is preferably 10% by mass or less, more preferably 5% by mass or less, and yet more preferably substantially zero. When improvement of viscosity and improvement of Tni are important, the content of compounds intramolecularly having a 2-methylbenzene-1,4-diyl group which may have a hydrogen atom substituted with a halogen is preferably decreased. The content of the compounds intramolecularly having a 2-methylbenzene-1,4-diyl group relative to the total mass of the composition is preferably 10% by mass or less, more preferably 5% by mass or less, and most preferably substantially zero. When reliability and long-term stability of the liquid crystal composition are important, the content of the compounds having a carbonyl group relative to the total mass of the composition is preferably 5% by mass or less, more preferably 3% by mass or less, yet more preferably 1% by mass, and most preferably substantially zero. The value of dielectric anisotropy $\Delta\varepsilon$ of the liquid crystal composition of the present invention at 25°C is preferably -2.0 to -6.0, more preferably -2.5 to-5.0, and yet more preferably -2.5 to -4.0. Specifically, when the response speed is important, the value is preferably -2.5 to -3.4 and when drive voltage is important, the value is preferably -3.4 to -4.0.

The value of the refractive index anisotropy $\Delta n$ of the liquid crystal composition of the present invention at 25°C is preferably 0.08 to 0.13 and more preferably 0.09 to 0.12. Specifically, when the cell gap is small, the value is preferably 0.10 to 0.12 and when the cell gap is large, the value is preferably 0.08 to 0.10.

The rotational viscosity ($\gamma_1$) of the liquid crystal composition of the present invention is preferably 150 or less, more preferably 130 or less, and particularly preferably 120 or less.

In the liquid crystal composition of the present invention, Z, which is the function of the rotational viscosity and the refractive index anisotropy, is preferably a particular value.

$$Z = \gamma 1 / \Delta n^2$$

In the expression, $\gamma_1$ represents rotational viscosity and $\Delta n$ represents refractive index anisotropy.

Z is preferably 13000 or less, more preferably 12000 or less, and most preferably 11000 or less.

The liquid crystal composition of the present invention needs to have a resistivity of $10^{12}$ ($\Omega \cdot m$) or more to be used in an active matrix display element. The resistivity is more preferably $10^{13}$ ($\Omega \cdot m$) and more preferably $10^{14}$ ($\Omega \cdot m$) or more.

The liquid crystal composition of the present invention may contain, in addition to the compounds described above, usual nematic liquid crystals, smectic liquid crystals, cholesteric liquid crystals, an antioxidant, a UV absorber, a polymerizable monomer, and the like according to usage. When the liquid crystal composition is required to exhibit chemical stability, chlorine atoms are preferably not contained in the molecule. When the liquid crystal composition is required to exhibit stability against light such as ultraviolet rays, a fused ring, such as a naphthalene ring, that has a large conjugation length and has an absorption peak in a UV range is preferably not contained in the molecule.

The polymerizable monomer is preferably a difunctional monomer represented by general formula (VII):

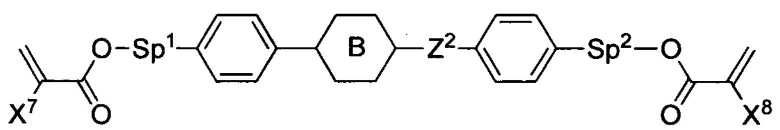

(VII)

In the formula, $X^7$ and $X^8$ each independently represent a hydrogen atom or a methyl group,
$Sp^1$ and $Sp^2$ each independently represent a single bond, an alkylene group having 1 to 8 carbon atoms, or $-O-(CH_2)_s-$ (in the formula, s represents an integer of 2 to 7 and the oxygen atom is to bond to an aromatic ring,
$Z^2$ represents $-OCH_2-$, $-CH_2O-$, -COO-, -OCO-, $-CF_2O-$, $-OCF_2-$,$-CH_2CH_2-$, $-CF_2CF_2-$, -CH=CH-COO-, -CH=CH-OCO-, -COO-CH=CH-,-OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$ in the formula, $Y^1$ and $Y^2$ each independently represent a fluorine atom or a hydrogen atom), -C≡C-, or a single bond, B represents a 1,4-phenylene group, a trans-1,4-cyclohexylene group, or a single bond, where all of 1,4-phenylene groups in the formula may have any hydrogen atom substituted with a fluorine atom.

A diacrylate derivative with $X^7$ and $X^8$ each representing a hydrogen atom, a dimethacrylate derivative with $X^7$ and $X^8$ each representing a methyl group, or a compound with $X^7$ and $X^8$ respectively representing a hydrogen atom and a methyl group or vice versa are all preferable. The polymerization rate is highest for the diacrylate derivative, lowest for the dimethacrylate derivative, and in middle for the asymmetric compound. A preferable form may be selected depending on the usage. For a PSA display element, a dimethacrylate derivative is particularly preferable.

$Sp^1$ and $Sp^2$ each independently represent a single bond, an alkylene group having 1 to 8 carbon atoms, or $-O-(CH_2)_s-$. For a PSA display element, at least one of $Sp^1$ and $Sp^2$ preferably represents a single bond. A compound with $Sp^1$ and $Sp^2$ both representing a single bond or a compound with one of $Sp^1$ and $Sp^2$ representing a single bond and the other representing an alkylene group having 1 to 8 carbon atoms or $-O-(CH_2)_s-$ are preferable. In such a case, an alkyl group having 1 to 4 is preferred and s is preferably 1 to 4.

$Z^1$ preferably represents $-OCH_2-$, $-CH_2O-$, -COO-, -OCO-,$-CF_2O-$, $-OCF_2-$, $-CH_2CH_2-$, $-CF_2CF_2-$, or a single bond, more preferably represents -COO-, -OCO-, or a single bond, and most preferably represents a single bond.

B represents a 1,4-phenylene group which may have any hydrogen atom substituted with a fluorine atom, a trans-1,4-cyclohexylene group, or a single bond, but preferably represents a 1,4-phenylene group or a single bond. When C represents a ring structure and not a single bond, $Z^2$ preferably represents a bonding group other than a single bond and when C represents a single bond, $Z^1$ preferably represents a single bond.

Based on these points, the ring structure between $Sp^1$ and $Sp^2$ in general formula (VII) is specifically preferably a structure described below.

When C in general formula (VII) represents a single bond and the ring structure is constituted by two rings, the following structures represented by formula (VIIa-1) to formula (VIIa-5) are preferable:

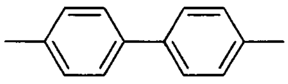
(VIIa-1)

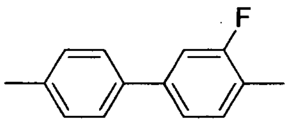
(VIIa-2)

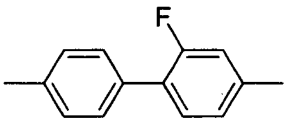
(VIIa-3)

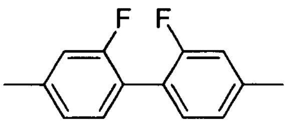
(VIIa-4)

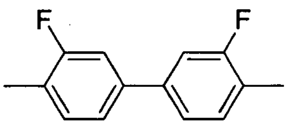
(VIIa-5)

In the formulae, each end is to bond to $Sp^1$ or $Sp^2$. Structures represented by formula (VIIa-1) to formula (VIIa-3) are more preferable and a structure represented by formula (VIIa-1) is most preferable.

Polymerizable compounds containing these skeletons have optimum alignment controlling power for PSA liquid crystal display elements. Since a desirable alignment state is obtained, display unevenness is decreased or completely eliminated.

Thus, compounds represented by general formula (VII-1) to general formula (VII-4) are particularly preferable as the polymerizable monomer and among these, a compound represented by general formula (VII-2) is most preferable.

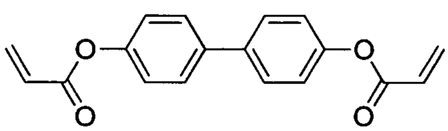
(VII-1)

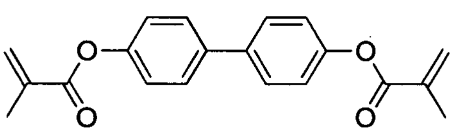
(VII-2)

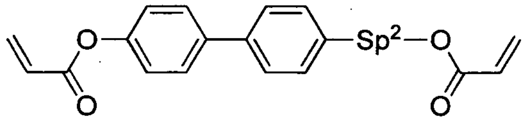

(VII-3)

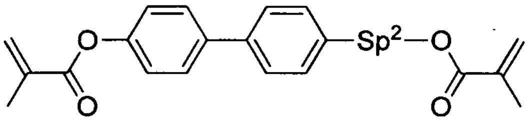

(VII-4)

In the formulae, $Sp^2$ represents an alkylene group having 2 to 5 carbon atoms.

When a monomer is to be added to the liquid crystal composition of the present invention, polymerization proceeds in the absence of a polymerization initiator. A polymerization initiator may be added to accelerate polymerization. Examples of the polymerization initiator include benzoin ethers, benzophenones, acetophenones, benzyl ketals, and acylphosphine oxides. A stabilizer may be added to improve storage stability. Examples of the stabilizer that can be used include hydroquinones, hydroquinone monoalkyl ethers, tertiary butyl catechols, pyrogallols, thiophenols, nitro compounds, β-naphthylamines, β-naphthols, and nitroso compounds.

The liquid crystal composition containing a polymerizable compound according to the present invention is useful for liquid crystal display elements, in particular, active matrix-driving liquid crystal display elements, and can be used in PSA mode, PSVA mode, VA mode, IPS mode, or ECB mode liquid crystal display elements.

The liquid crystal composition containing a polymerizable compound according to the present invention exhibits liquid crystal alignment ability when the polymerizable compound therein is polymerized by UV irradiation and is used in a liquid crystal display element in which the amount of transmitting light is controlled by utilizing birefringence of the liquid crystal composition. The composition is useful for liquid crystal display elements such as for active matrix liquid crystal displays (AM-LCDs), twisted nematic (TN) liquid crystal display elements, super twisted nematic liquid crystal displays (STN-LCDs), OCB-LCD, and in-plane-switching liquid crystal displays (IPS-LCD). The composition is particularly useful for AM-LCDs and can be used in liquid crystal display elements of transmission type or reflection type.

The two substrates of a liquid crystal cell used in a liquid crystal display element can be composed of glass or a flexible transparent material such as a plastic and one of them can be composed of an opaque material such as silicon. A transparent substrate having a transparent electrode layer can be obtained by, for example, sputter-depositing indium tin oxide (ITO) on a transparent substrate such as a glass plate.

The substrates are arranged to oppose each other with the transparent electrode layer facing inward. During this process, the gap between the substrates may be adjusted by using spacers. In such a case, the gap is preferably adjusted so that the thickness of a light adjusting layer to be obtained is 1 to 100 μm and more preferably 1.5 to 10 μm. In the case where a polarizer is used, the product of the cell thickness d and the refractive index anisotropy Δn of the liquid crystal is preferably adjusted to maximize contrast. In the case where two polarizers are used, the polarization axis of each polarizer can be adjusted to improve viewing angle and contrast. A retardation film for expanding the viewing angle can also be used. Examples of the spacers include glass particles, plastic particles, alumina particles, and photoresist materials. Then a sealing material such as an epoxy-based thermosetting composition is screen-printed onto the substrate while securing a liquid crystal injection port, the substrates are bonded to each other, and heating is performed to thermally cure the sealing material.

A common vacuum injection method or ODF method can be used to place a polymerizable-compound-containing liquid crystal composition in a gap between the two substrates, for example. However, the vacuum injection method has a problem in that, although drop marks do not occur, trace of injection remains. The invention of the subject application is more suitable for use in making a display element by an ODF method.

In order to satisfactorily align the liquid crystal, an appropriate polymerization speed is desirable. Thus, the method for polymerizing the polymerizable compounds preferably involves irradiating the liquid crystal composition with an active energy ray such as an ultraviolet ray or an electron beam or with two or more active energy rays either simultaneously or sequentially. In the case where ultraviolet rays are used, a polarized light source may be used or an unpolarized light source may be used. In the case where polymerization is performed while holding the polymerizable-compound-containing liquid crystal composition between the two substrates, at least the substrate on the incident side must have an appropriate degree of transparency for the active energy ray used. Moreover, after only a particular portion is polymerized by using a mask during irradiation, the alignment state of the unpolymerized portion may be changed by changing the conditions such as electric field, magnetic field, or temperature and then an active energy ray may be applied again to perform polymerization. In particular, when the liquid crystal composition is exposed with an UV ray, UV exposure is preferably performed while applying an AC electric field to the polymerizable-compound-containing liquid crystal composition. The AC electric field applied is preferably an AC having a frequency of 10 Hz to 10 kHz and more preferably an AC having a frequency of 60 Hz to 10 kHz, and the voltage is selected depending on the desired pretilt

angle of the liquid crystal display element. In other words, the pretilt angle of the liquid crystal display element can be controlled by the applied voltage. For an MVA-mode liquid crystal display element, the pretilt angle is preferably controlled to 80° to 89.9° from the viewpoints of alignment stability and contrast.

The temperature during irradiation is preferably within a temperature range in which the liquid crystal composition of the present invention retains a liquid crystal state. Polymerization is preferably conducted at a temperature near room temperature, that is, typically a temperature in a range of 15 to 35°C. The lamp that generates UV rays may be a metal halide lamp, a high-pressure mercury lamp, an ultrahigh-pressure mercury lamp, or the like. The wavelength of the UV ray applied is preferably in the wavelength region outside the absorption wavelength region of the liquid crystal composition and, if needed, some portions of the UV rays may be cut. The intensity of the ultraviolet ray applied is preferably 0.1 $mW/cm^2$ to 100 $W/cm^2$ and more preferably 2 $mW/cm^2$ to 50 $W/cm^2$. The amount of energy of the ultraviolet ray applied can be appropriately adjusted but is preferably 10 $mJ/cm^2$ to 500 $J/cm^2$ and more preferably 100 $mJ/cm^2$ to 200 $J/cm^2$. The intensity may be varied during irradiation with UV rays. The amount of time for which the UV ray is applied is appropriately selected depending on the intensity of the UV ray applied but is preferably 10 to 3600 seconds and more preferably 10 to 600 seconds.

The liquid crystal display element of the present invention includes, as shown in Fig. 1, a first substrate having a common electrode composed of a transparent conductive material, a second substrate having pixel electrodes composed of a transparent conductive material and thin film transistors for controlling the pixel electrodes in the respective pixels, and a liquid crystal composition interposed between the first substrate and the second substrate. The liquid crystal molecules in the liquid crystal composition used in the liquid crystal display element align substantially vertically with respect to the substrate when no voltage is applied and the aforementioned liquid crystal composition of the present invention is used as the liquid crystal composition.

Occurrence of drop marks is strongly affected by the liquid crystal material injected and also by the structure of the display element. In particular, a color filter, thin film transistors, or the like formed in the liquid crystal display element are isolated from the liquid crystal composition only by thin alignment films, transparent electrodes, or the like and thus combinations affect occurrence of drop marks.

In particular, when thin film transistors are of an inverse-staggered type, the drain electrode covers the gate electrode and thus the area tends to increase. The drain electrode is composed of a metal material such as copper, aluminum, chromium, titanium, molybdenum, or tantalum and typically subjected to a passivation treatment. However, the passivation film is usually thin and so is the alignment film and passage of ionic substances is unlikely to be blocked. Thus, occurrence of drop marks due to interactions between the metal material and the liquid crystal composition could not avoided.

The present invention is suitable for liquid crystal display element that includes thin film transistors of an inverse-staggered type as illustrated in Fig. 2 and is preferable when aluminum wiring is employed.

The liquid crystal display element that uses the liquid crystal composition of the present invention is useful since it achieves both high-speed response and less display defects. The liquid crystal display element is particularly useful as an active matrix driving liquid crystal display element and can be used in VA mode, PSVA mode, PSA mode, IPS mode, or ECB mode.

## EXAMPLES

The present invention will be described in further detail through Examples below which do not limit the scope of the present invention. In the compositions of Examples and Comparative Examples, "%" means "% by mass".

Properties of examples measured were as follows:

$T_{ni}$: nematic phase-isotropic liquid phase transition temperature (°C)
$\Delta n$: refractive index anisotropy at 25°C
$\Delta\varepsilon$: dielectric anisotropy at 25°C
$\eta$: viscosity at 20°C (mPa·s)
$\gamma_1$: rotational viscosity at 25°C (mPa·s)
VHR: voltage holding ratio at a frequency of 60 Hz, application voltage of 1 V at 60°C (%)

Ghosting:

Evaluation of ghosting in liquid crystal display elements was conducted as follows: A particular fixed pattern was displayed in a display area for 1000 hours and then uniform display was performed in all parts of screen. The level of the afterimage of the fixed pattern observed with naked eye was rated according to the following four-grade scale.

Double circle mark: No after image
Circle mark: Faint afterimage was observed but the extent of the afterimage was acceptable.
Triangle mark: Afterimage was observed and the extent of the afterimage was unacceptable.
X mark: Extensive afterimage was observed.

Drop marks:

Drop marks in liquid crystal display elements were evaluated by observing drop marks that appeared white over an all-black display according to the following four-grade scale:

Double circle mark: No after image
Circle mark: Faint afterimage was observed but the extent of the afterimage was acceptable.
Triangle mark: Afterimage was observed and the extent of the afterimage was unacceptable.
X mark: Extensive afterimage was observed.

Process compatibility

Process compatibility was evaluated through an ODF process as follows. By using a constant-volume pump, 50 pL of liquid crystals was dropped at a time and this operation was performed 100000 times. The change in amount of liquid crystals dropped in every 100 operations (a total in 0 to 100th dropping operations, 101st to 200th dropping operations, 201st to 300th dropping operations, ..., and 99901st to 100000th dropping operations) was evaluated on the following four-grade scale:

Double circle mark: Changes were very little (Liquid crystal display elements can be stably produced)
Circle mark: Changes were little and at an acceptable level Triangle mark: Changes were at an unacceptable level (Yield decreased due to occurrence of nonuniformity) X mark: Significant changes occurred (Leakage of liquid crystals and vacuum bubbles occurred)

Low-temperature solubility:

Evaluation of low-temperature solubility was conducted as follows. After preparation of a liquid crystal composition, 1 g of the liquid crystal composition was weighed and placed in a 2 mL sample jar and exposed to continuous temperature change cycles each consisting of "-20°C (held for 1 hour) → heating (0.1 °C/minute) → 0°C (held for 1 hour) → heating (0.1 °C/minute) → 20°C (held for 1 hour) → cooling (-0.1 °C/minute) → 0°C (held for 1 hour) → cooling (-0.1 °C/minute) → -20°C" in a temperature-controlled testing chamber. Generation of precipitates from the liquid crystal composition was observed visually and the solubility was evaluated based on the following four-grade scale.

Double circle mark: No precipitates were observed for 600 hours or longer.

Circle mark: No precipitates were observed for 300 hours or longer

Triangle mark: Precipitates were observed within 150 hours.

X mark: Precipitates were observed within 75 hours.

In examples, following abbreviations are used to denote compounds:

(Side chain)

| | | |
|---|---|---|
| -n | $-C_nH_{2n+1}$ | linear alkyl group with n carbon atoms |
| -On | $-OC_nH_{2n+1}$ | linear alkoxy group with n carbon atoms |
| -V | $-C=CH_2$ | vinyl group |

(Ring structure)

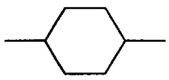
Cy

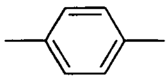
Ph

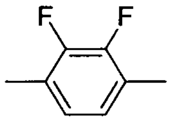
Ph5

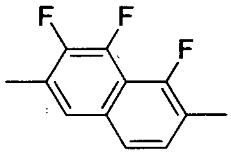
Nd4

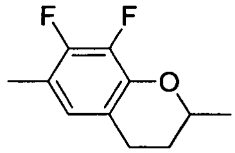
Ch3

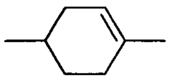
Cb

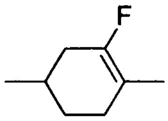
Cb1

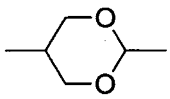
Oc

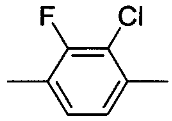
Ph15

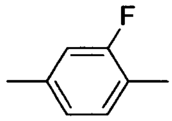
Ph4

(Example 1)

A liquid crystal composition having the composition below was prepared and physical property values were measured. The results are shown in the following table.

A VA liquid crystal display element shown in Fig. 1 was prepared by using the liquid crystal composition of Example 1. This liquid crystal display element includes an inverse-staggered thin film transistors as active devices. Injection of the liquid crystal composition was performed by a dropping method and evaluation of ghosting, drop marks, process compatibility, and low-temperature solubility was carried out.

The notation on the left-hand side of the content is the abbreviation of a compound as described above.

Example 1

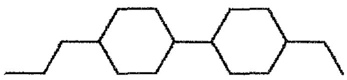
3CyCy2 23%

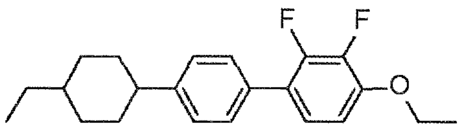
2CyPhPh5O2 7%

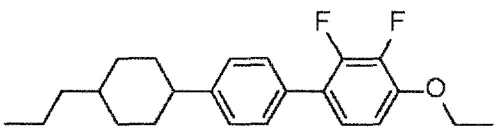
3CyPhPh5O2 7%

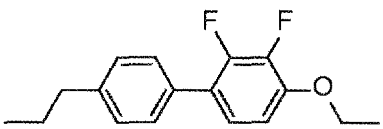
3PhPh5O2 7.5%

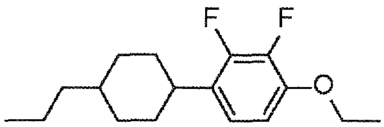

3CyPh5O2 15%

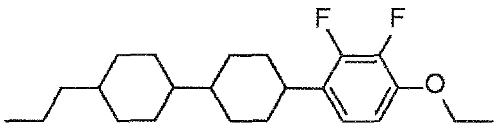

3CyCyPh5O2 6.5%

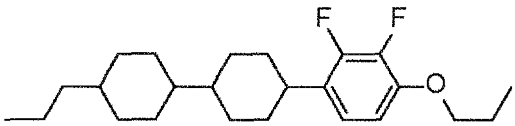

3CyCyPh5O3 6%

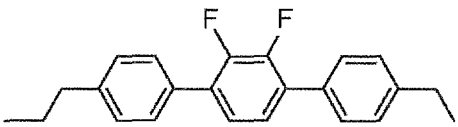

3PhPh5Ph2 5%

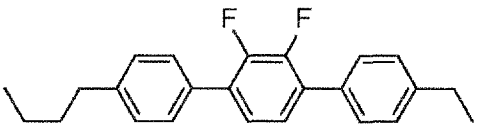

4PhPh5Ph2 5%

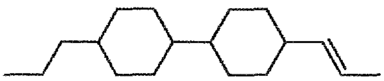

3CyCyV1 10%

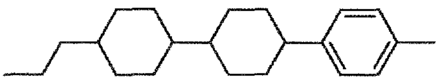

3CyCyPh1 8%

[Table 1]

| | |
|---|---|
| $T_{NI}$ / °C | 75.3 |
| $\Delta n$ | 0.110 |
| $n_o$ | 1.485 |
| $\Delta\varepsilon$ | -3.3 |
| $\varepsilon_\perp$ | 6.8 |
| $\eta$ / mPa·s | 17.8 |
| $\gamma_1$ / mPa·s | 120 |
| $\gamma_1 / \Delta n^2$ | 9.9 |
| Initial VHR /% | 99.9 |
| VHR after 1H at 150°C /% | 99.5 |
| Ghosting evaluation | ◎ |
| Drop mark evaluation | ◎ |
| Process compatibility evaluation | ◎ |

(continued)

| | |
|---|---|
| Low-temperature solubility evaluation | ◎ |

The results show that the liquid crystal composition of Example 1 has a liquid crystal phase temperature range of 75.2°C, which is a practical range for liquid crystal compositions for televisions, a dielectric anisotropy with a large absolute value, low viscosity, and optimum Δn. A VA liquid crystal display element illustrated in Fig. 1 was fabricated by using the liquid crystal composition of Example 1 and ghosting, drop marks, process compatibility, and low-temperature solubility were evaluated by the aforementioned processes. The evaluation results were excellent.

(Comparative Example 1)

A liquid crystal composition shown below was designed and prepared so that the composition had a liquid crystal phase temperature range, a refractive index anisotropy, and a dielectric anisotropy comparable to those of the composition of Example 1 without incorporation of compounds represented by formula (I). The physical property values were measured. The results are shown in the following table

As in Example 1, the notation on the left-hand side of the content is the abbreviation of a compound as described above.

Comparative Example 1

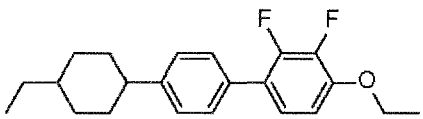 2CyPhPh5O2 4%

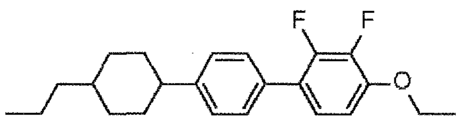 3CyPhPh5O2 4%

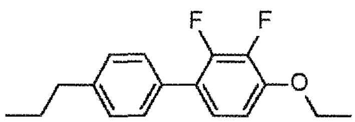 3PhPh5O2 7%

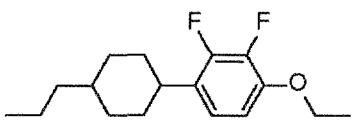 3CyPh5O2 12%

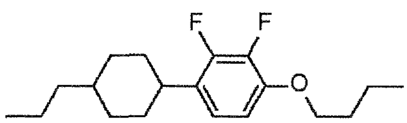 3CyPh5O4 6%

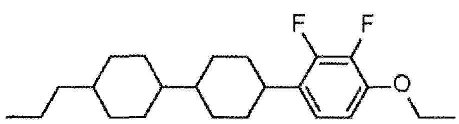 3CyCyPh5O2 7%

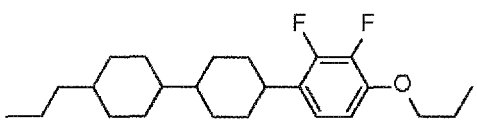 3CyCyPh5O3 7%

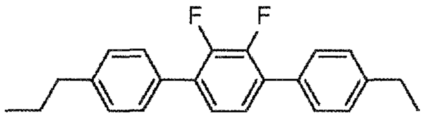

3PhPh5Ph2 4%

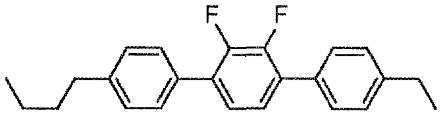

4PhPh5Ph2 4%

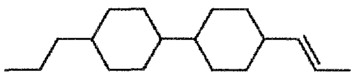

3CyCyV1 10%

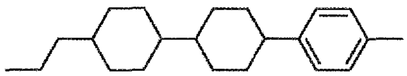

3CyCyPh1 8%

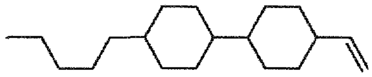

5CyCyV 27%

[Table 2]

| | |
|---|---|
| $T_{NI}$ / °C | 75.0 |
| $\Delta n$ | 0.110 |
| $n_o$ | 1.482 |
| $\Delta\varepsilon$ | -3.3 |
| $\varepsilon_\perp$ | 6.7 |
| $\eta$ / mPa·s | 20.2 |
| $\gamma_1$ / mPa·s | 134 |
| $\gamma_1 / \Delta n^2$ | 11.1 |
| Initial VHR /% | 98.5 |
| VHR after 1H at 150°C /% | 97.0 |
| Ghosting evaluation | × |
| Drop mark evaluation | × |
| Process compatibility evaluation | Δ |
| Low-temperature solubility evaluation | ○ |

It was shown that the liquid crystal composition (Comparative Example 1) not containing compounds represented by formula (I) had a high viscosity $\eta$ although the liquid crystal phase temperature range, the refractive index anisotropy, and dielectric anisotropy were similar compared to the liquid crystal composition (Example 1) containing a compound represented by formula (I). As for $\gamma 1$, the value, 134 mPa·s observed in Comparative Example 1 was higher than the value 121 mPa·s observed in Example 1 and Comparative Example 1 was also inferior in terms of the parameter, $\gamma 1/\Delta n^2$, indicating effective response speed in the liquid crystal display element and a display. Whereas the initial VHR in Comparative Example 1 was 98.5%, the VHR after the element was left at a high temperature of 150°C for 1 hour was 97.0% and this was poor compared to Example 1. Process compatibility was evaluated and was found to be at a level where changes were not acceptable compared to Example 1. Low-temperature solubility was evaluated and precipitation occurred faster than in Example 1.

(Comparative Examples 2 and 3)

A liquid crystal composition (Comparative Example 2) shown below was designed and prepared so that the composition had a liquid crystal phase temperature range, a refractive index anisotropy, and a dielectric anisotropy comparable to those of the composition of Example 1 without incorporation of compounds represented by formula (II-1). A liquid crystal composition (Comparative Example 3) shown below was designed and prepared so that the composition had a liquid crystal phase temperature range, a refractive index anisotropy, and a dielectric anisotropy comparable to those of the composition of Example 1 without incorporation of compounds represented by formula (II-2). The physical property values of the liquid crystal compositions were measured. The results are shown in the following table.

[Table 3]

| Comparative Example 2 | | Comparative Example 3 | |
|---|---|---|---|
| 3CyCy2 | 23.0% | 3CyCy2 | 22.5% |
| 3PhPh5O2 | 13.0% | 2CyPhPh5O2 | 8.0% |
| 3CyPh5O2 | 3.0% | 3CyPhPh5O2 | 8.0% |
| 3CyCyPh5O2 | 11.5% | 3CyPh5O2 | 15.0% |
| 3CyCyPh5O3 | 11.5% | 3CyPh5O4 | 3.0% |
| 4CyCyPh5O2 | 11.0% | 3CyCyPh5O2 | 8.0% |
| 3PhPh5Ph2 | 5.5% | 3CyCyPh5O3 | 8.0% |
| 4PhPh5Ph2 | 5.5% | 4CyCyPh5O2 | 4.0% |
| 3CyCyV1 | 10.0% | 3PhPh5Ph2 | 5.0% |
| 5PhPh1 | 6.0% | 4PhPh5Ph2 | 5.0% |
| $T_{NI}$ / °C | 75.9 | 3CyCyV1 | 8.0% |
| $\Delta n$ | 0.109 | 5PhPh1 | 5.5% |
| $n_o$ | 1.486 | $T_{NI}$ / °C | 75.2 |
| $\Delta\varepsilon$ | -3.3 | $\Delta n$ | 0.110 |
| $\varepsilon_\perp$ | 6.6 | $n_o$ | 1.485 |
| $\eta$ / mPa·s | 20.2 | $\Delta\varepsilon$ | -3.3 |
| $\gamma_1$ / mPa·s | 145 | $\varepsilon_\perp$ | 7.0 |
| $\gamma_1 / \Delta n^2$ | 12.2 | $\eta$ / mPa·s | 22.3 |
| Initial VHR/% | 99.1 | $\gamma_1$ / mPa·s | 150 |
| VHR after 1H at 150°C /% | 97.2 | $\gamma_1 / \Delta n^2$ | 12.4 |
| Ghosting evaluation | × | Initial VHR/% | 99.0 |
| Drop mark evaluation | Δ | VHR after 1H at 150°C /% | 97.3 |
| Process compatibility evaluation | Δ | Ghosting evaluation | × |
| Low-temperature solubility evaluation | ○ | Drop mark evaluation | Δ |
| | | Process compatibility evaluation | Δ |
| | | Low-temperature solubility evaluation | Δ |

It was shown that the liquid crystal composition (Comparative Example 2) not containing a compound represented by general formula (II-1) had a high viscosity $\eta$ and a high rotational viscosity $\gamma 1$ compared to the liquid crystal composition (Example 1) that contained 14% by mass of the compounds represented by general formula (II-1) although the liquid crystal phase temperature range, the refractive index anisotropy, and dielectric anisotropy were similar. Whereas the initial VHR in Comparative Example 2 was 99.1%, the VHR after the element was left at a high temperature of 150°C for 1 hour was 97.2% and this was poor compared to Example 1. Process compatibility was evaluated and was found

to be at a level where changes were not acceptable compared to Example 1. Low-temperature solubility was evaluated and precipitation occurred faster than in Example 1.

It was shown that the liquid crystal composition (Comparative Example 3) not containing a compound represented by general formula (II-2) had a high viscosity η and a high rotational viscosity γ1 compared to the liquid crystal composition (Example 1) that contained 7.5% by mass of the compounds represented by general formula (II-2) although the liquid crystal phase temperature range, the refractive index anisotropy, and dielectric anisotropy were similar. Whereas the initial VHR in Comparative Example 2 was 99.0%, the VHR after the element was left at a high temperature of 150°C for 1 hour was 97.3% and this was poor compared to Example 1. Process compatibility was evaluated and was found to be at a level where changes were not acceptable compared to Example 1. Low-temperature solubility was evaluated and precipitation occurred faster than in Example 1.

(Examples 2 and 3)

Liquid crystal compositions having the following compositions and designed to have a liquid crystal phase temperature range, a refractive index anisotropy, and a dielectric anisotropy comparable to those of the composition of Example 1 were prepared and the physical property values of the compositions were measured. The results are shown in the following table.

VA liquid crystal display elements were prepared as in Example 1 by using the liquid crystal compositions of Examples 2 and 3. Ghosting, drop marks, process compatibility, and low-temperature solubility were evaluated. The results are shown in the same table.

[Table 4]

| Example 2 | | | Example 3 | |
|---|---|---|---|---|
| 3CyCy2 | 30.0% | | 3CyCy2 | 12.0% |
| 2CyPhPh5O2 | 8.0% | | 2CyPhPh5O2 | 6.0% |
| 3CyPhPh5O2 | 8.0% | | 3CyPhPh5O2 | 6.0% |
| 3PhPh5O2 | 12.0% | | 3PhPh5O2 | 7.0% |
| 3CyPh5O2 | 6.0% | | 3CyPh5O2 | 12.0% |
| 3CyCyPh5O2 | 9.0% | | 3CyPh5O4 | 7.0% |
| 3CyCyPh5O3 | 7.0% | | 3CyCyPh5O2 | 5.0% |
| 3PhPh5Ph2 | 5.0% | | 3CyCyPh5O3 | 4.0% |
| 4PhPh5Ph2 | 5.0% | | 3PhPh5Ph2 | 5.0% |
| 3CyCyV1 | 10.0% | | 4PhPh5Ph2 | 5.0% |
| $T_{NI}$ / °C | 73.6 | | 3CyCy4 | 8.0% |
| $\Delta n$ | 0.110 | | 3CyCy5 | 2.0% |
| $n_o$ | 1.485 | | 3CyCyV1 | 10.0% |
| $\Delta\varepsilon$ | -3.3 | | 3CyCyPh1 | 11.0% |
| $\varepsilon_\perp$ | 6.7 | | $T_{NI}$ / °C | 75.6 |
| η / mPa·s | 16.8 | | $\Delta n$ | 0.110 |
| $\gamma_1$ / mPa· s | 123 | | $n_o$ | 1.484 |
| $\gamma_1 / \Delta n^2$ | 10.2 | | $\Delta\varepsilon$ | -3.3 |
| Initial VHR/% | 99.8 | | $\varepsilon_\perp$ | 6.7 |
| VHR after 1H at 150°C /% | 99.3 | | η / mPa·s | 18.4 |
| Ghosting evaluation | ◎ | | $\gamma_1$ / mPa·s | 122 |
| Drop mark evaluation | ◎ | | $\gamma_1 / \Delta n^2$ | 10.1 |
| Process compatibility evaluation | ○ | | Initial VHR/% | 99.8 |

(continued)

| Example 2 | | | Example 3 | |
|---|---|---|---|---|
| Low-temperature solubility evaluation | ◎ | | VHR after 1H at 150°C /% | 99.5 |
| | | | Ghosting evaluation | ◎ |
| | | | Drop mark evaluation | ○ |
| | | | Process compatibility evaluation | ◎ |
| | | | Low-temperature solubility evaluation | ◎ |

The results show that the liquid crystal compositions of Examples 2 and 3 have a liquid crystal phase temperature range practical for liquid crystal compositions for televisions, a dielectric anisotropy with a large absolute value, a low viscosity, and an optimum $\Delta n$. VA liquid crystal display elements illustrated in Fig. 1 were fabricated by using the liquid crystal compositions of Examples 2 and 3 and ghosting, drop marks, process compatibility, and low-temperature solubility were evaluated by the aforementioned processes. The evaluation results were excellent.

(Examples 4 and 5)

Liquid crystal compositions having the following compositions and designed to have a liquid crystal phase temperature range, a refractive index anisotropy, and a dielectric anisotropy comparable to those of the composition of Example 1 were prepared and the physical property values of the compositions were measured. The results are shown in the following table.

VA liquid crystal display elements were prepared as in Example 1 by using the liquid crystal compositions of Examples 4 and 5. Ghosting, drop marks, process compatibility, and low-temperature solubility were evaluated. The results are shown in the same table.

[Table 5]

| Example 4 | | | Example 5 | |
|---|---|---|---|---|
| 3CyCy2 | 23.0% | | 3CyCy2 | 23.0% |
| 2CyPhPh5O2 | 12.0% | | 2CyPhPh5O2 | 6.0% |
| 3CyPhPh5O2 | 12.0% | | 3CyPhPh5O2 | 5.0% |
| 3PhPh5O2 | 9.0% | | 3PhPh5O2 | 7.0% |
| 3CyPh5O2 | 13.0% | | 3CyPh5O2 | 14.5% |
| 3CyCyPh5O2 | 2.0% | | 3CyCyPh5O2 | 8.0% |
| 3CyCyPh5O3 | 2.0% | | 3CyCyPh5O3 | 7.5% |
| 3PhPh5Ph2 | 2.5% | | 3PhPh5Ph2 | 6.0% |
| 4PhPh5Ph2 | 2.5% | | 4PhPh5Ph2 | 6.0% |
| 3CyCy4 | 3.0% | | 3CyCyV1 | 10.0% |
| 3CyCyV1 | 10.0% | | 3CyCyPh1 | 7.0% |
| 3CyCyPh1 | 9.0% | | $T_{NI}$ / °C | 75.9 |
| $T_{NI}$/°C | 75.8 | | $\Delta n$ | 0.110 |
| $\Delta n$ | 0.110 | | $n_o$ | 1.485 |
| $n_o$ | 1.485 | | $\Delta\varepsilon$ | -3.3 |
| $\Delta\varepsilon$ | -3.3 | | $\varepsilon_\perp$ | 6.7 |
| $\varepsilon_\perp$ | 6.8 | | $\eta$ / mPa·s | 18.2 |
| $\eta$ / mPa·s | 16.8 | | $\gamma_1$ / mPa·s | 124 |
| $\gamma_1$ / mPa·s | 113 | | $\gamma_1$ / $\Delta n^2$ | 10.2 |

(continued)

| Example 4 | | | Example 5 | |
|---|---|---|---|---|
| $\gamma_1 / \Delta n^2$ | 9.3 | | Initial VHR/% | 99.7 |
| Initial VHR/% | 99.6 | | VHR after 1H at 150°C/% | 99.2 |
| VHR after 1H at 150°C /% | 99.0 | | Ghosting evaluation | ◎ |
| Ghosting evaluation | ○ | | Drop mark evaluation | ◎ |
| Drop mark evaluation | ◎ | | Process compatibility evaluation | ○ |
| Process compatibility evaluation | ○ | | Low-temperature solubility evaluation | ◎ |
| Low-temperature solubility evaluation | ○ | | | |

The results show that the liquid crystal compositions of Examples 4 and 5 have a liquid crystal phase temperature range practical for liquid crystal compositions for televisions, a dielectric anisotropy with a large absolute value, a low viscosity, and an optimum $\Delta n$. VA liquid crystal display elements illustrated in Fig. 1 were fabricated by using the liquid crystal compositions of Examples 4 and 5 and ghosting, drop marks, process compatibility, and low-temperature solubility were evaluated by the aforementioned processes. The evaluation results were excellent.

(Reference Example 6)

A liquid crystal composition having the following composition and designed to have a liquid crystal phase temperature range and a refractive index anisotropy comparable to those of the composition of Example 1 and a dielectric anisotropy higher than the of the composition of Example 1 was prepared so that the composition was compatible with low-voltage driving. The physical property values of the composition was measured. The results are shown in the following table.

A VA liquid crystal display element was prepared as in Example 1 by using the liquid crystal composition of Example 6. Ghosting, drop marks, process compatibility, and low-temperature solubility were evaluated. The results are shown in the same table.

[Table 6]

| Reference Example 6 | |
|---|---|
| 3CyCy2 | 20.0% |
| 2CyPhPh5O2 | 7.0% |
| 3CyPhPh5O2 | 12.0% |
| 3PhPh5O2 | 13.0% |
| 3CyPh5O2 | 10.0% |
| 3CyCyPh5O2 | 12.0% |
| 3CyCy4 | 7.0% |
| 3CyCy5 | 3.0% |
| 3CyCyV1 | 10.0% |
| 3CyCyPh1 | 6.0% |
| $T_{NI}$ / °C | 75.2 |
| $\Delta n$ | 0.100 |
| $n_o$ | 1.482 |
| $\Delta\varepsilon$ | -3.6 |
| $\varepsilon_\perp$ | 6.9 |
| $\eta$ / mPa·s | 16.0 |

(continued)

| Reference Example 6 | |
|---|---|
| $\gamma_1$ / mPa·s | 105 |
| $\gamma_1$ / $\Delta n^2$ | 10.5 |
| Initial VHR /% | 99.7 |
| VHR after 1H at 150°C /% | 99.2 |
| Ghosting evaluation | ◎ |
| Drop mark evaluation | ◎ |
| Process compatibility evaluation | ◎ |
| Low-temperature solubility evaluation | ◎ |

The results show that the liquid crystal composition of Reference Example 6 has a liquid crystal phase temperature range practical for liquid crystal compositions for televisions, a dielectric anisotropy with a large absolute value that is compatible with low-voltage driving, a low viscosity, and an optimum $\Delta n$. A VA liquid crystal display element illustrated in Fig. 1 was fabricated by using the liquid crystal compositions of Reference Example 6 and ghosting, drop marks, process compatibility, and low-temperature solubility were evaluated by the aforementioned processes. The evaluation results were excellent.

(Comparative Examples 4 and 5)

A liquid crystal composition (Comparative Example 4) shown below was designed and prepared so that the composition had a liquid crystal phase temperature range, a refractive index anisotropy, and a dielectric anisotropy comparable to those of the composition of Reference Example 6 without incorporation of compounds represented by formula (I). A liquid crystal composition (Comparative Example 5) shown below was designed and prepared so that the composition had a liquid crystal phase temperature range, a refractive index anisotropy, and a dielectric anisotropy comparable to those of the composition of Reference Example 6 without incorporation of compounds represented by formula (II-1). The physical property values of these compositions were measured. The results are shown in the following table.

[Table 7]

| Comparative Example 4 | | | Comparative Example 5 | |
|---|---|---|---|---|
| 2CyPhPh5O2 | 7.0% | | 3CyCy2 | 20.0% |
| 3CyPhPh5O2 | 12.0% | | 3PhPh5O2 | 12.0% |
| 3PhPh5O2 | 4.0% | | 3CyPh5O2 | 10.0% |
| 3CyPh5O2 | 12.0% | | 3CyPh5O4 | 3.0% |
| 3CyPh5O4 | 10.0% | | 3CyCyPh5O2 | 12.0% |
| 3CyCyPh5O2 | 10.0% | | 3CyCyPh5O3 | 6.0% |
| 3CyCy4 | 11.0% | | 4CyCyPh5O2 | 9.0% |
| 3CyCyV1 | 10.0% | | 5CyCyPh502 | 3.0% |
| 3CyCyPh1 | 4.0% | | 3CyCyV1 | 10.0% |
| 5CyCyV | 20.0% | | 3CyPhPh2 | 11.0% |
| $T_{NI}$ / °C | 75.1 | | 5PhPh1 | 4.0% |
| $\Delta n$ | 0.100 | | $T_{NI}$ / °C | 74.9 |
| $n_o$ | 1.478 | | $\Delta n$ | 0.101 |
| $\Delta\varepsilon$ | -3.6 | | $n_o$ | 1.485 |
| $\varepsilon_\perp$ | 7.1 | | $\Delta\varepsilon$ | -3.6 |

(continued)

| Comparative Example 4 | | Comparative Example 5 | |
|---|---|---|---|
| η / mPa·s | 19.8 | $\varepsilon_\perp$ | 7.0 |
| $\gamma_1$ / mPa·s | 125 | η / mPa·s | 18.2 |
| $\gamma_1$ / $\Delta n^2$ | 12.5 | $\gamma_1$ / mPa·s | 117 |
| Initial VHR/% | 98.9 | $\gamma_1$ / $\Delta n^2$ | 11.5 |
| VHR after 1H at 150°C /% | 97.3 | Initial VHR /% | 99.0 |
| Ghosting evaluation | × | VHR after 1H at 150°C /% | 97.4 |
| Drop mark evaluation | × | Ghosting evaluation | × |
| Process compatibility evaluation | Δ | Drop mark evaluation | Δ |
| Low-temperature solubility evaluation | ○ | Process compatibility evaluation | ○ |
| | | Low-temperature solubility evaluation | ○ |

It was shown that the liquid crystal composition (Comparative Example 4) not containing a compound represented by general formula (I) had a high viscosity η and a high rotational viscosity γ1 compared to the liquid crystal composition (Reference Example 6) that contained 20% by mass of the compounds represented by general formula (I) although the liquid crystal phase temperature range, the refractive index anisotropy, and dielectric anisotropy were similar. Whereas the initial VHR in Comparative Example 3 was 98.9%, the VHR after the element was left at a high temperature of 150°C for 1 hour was 97.3% and this was poor compared to Reference Example 6. Process compatibility was evaluated and was found to be at a level where changes were not acceptable compared to Reference Example 6. Low-temperature solubility was evaluated and precipitation occurred faster than in Reference Example 6.

It was shown that the liquid crystal composition (Comparative Example 5) not containing a compound represented by general formula (II) had a high viscosity η and a high rotational viscosity γ1 compared to the liquid crystal composition (Example 6) that contained 19% by mass of the compounds represented by general formula (II) although the liquid crystal phase temperature range, the refractive index anisotropy, and dielectric anisotropy were similar. Whereas the initial VHR in Comparative Example 3 was 99.0%, the VHR after the element was left at a high temperature of 150°C for 1 hour was 97.4% and this was poor compared to Reference Example 6. Process compatibility was evaluated and was found to be at a level where changes were not acceptable compared to Reference Example 6. Low-temperature solubility was evaluated and precipitation occurred faster than in Example 6.

(Comparative Example 6)

A liquid crystal composition (Comparative Example 6) shown below was designed and prepared so that the composition had a liquid crystal phase temperature range, a refractive index anisotropy, and a dielectric anisotropy comparable to those of the composition of Example 6 without incorporation of compounds represented by formula (II-2). The physical property values of the liquid crystal compositions were measured. The results are shown in the following table.

[Table 8]

| Comparative Example 6 | |
|---|---|
| 3CyCy2 | 20.0% |
| 2CyPhPh5O2 | 8.0% |
| 3CyPhPh5O2 | 12.0% |
| 3CyPh5O2 | 14.0% |
| 3CyPh5O4 | 8.0% |
| 3CyCyPh5O2 | 12.0% |
| 3CyCyPh5O3 | 3.0% |
| 4CyCyPh5O2 | 3.0% |

(continued)

| Comparative Example 6 | |
|---|---|
| 3CyCyV1 | 10.0% |
| 3CyCyPh1 | 4.5% |
| 5PhPh1 | 5.5% |
| $T_{NI}$ / °C | 75.7 |
| $\Delta n$ | 0.100 |
| $n_o$ | 1.482 |
| $\Delta\varepsilon$ | -3.6 |
| $\varepsilon_{\perp}$ | 7.2 |
| $\eta$ / mPa·s | 21.2 |
| $\gamma_1$ / mPa·s | 134 |
| $\gamma_1 / \Delta n^2$ | 13.4 |
| Initial VHR /% | 98.7 |
| VHR after 1H at 150°C /% | 97.1 |
| Ghosting evaluation | × |
| Drop mark evaluation | × |
| Process compatibility evaluation | Δ |
| Low-temperature solubility evaluation | Δ |

It was shown that the liquid crystal composition (Comparative Example 6) not containing a compound represented by general formula (II-2) had a high viscosity $\eta$ and a rotational viscosity $\gamma 1$ compared to the liquid crystal composition (Reference Example 6) that contained 13% of the compounds represented by general formula (II-2) although the liquid crystal phase temperature range, the refractive index anisotropy, and dielectric anisotropy were similar. Whereas the initial VHR in Comparative Example 3 was 98.7%, the VHR after the element was left at a high temperature of 150°C for 1 hour was 97.1% and this was poor compared to Reference Example 6. Process compatibility was evaluated and was found to be at a level where changes were not acceptable compared to Reference Example 6. Low-temperature solubility was evaluated and precipitation occurred faster than in Reference Example 6.

(Reference Examples 7 and 8)

Liquid crystal compositions having compositions shown below and designed to have a liquid crystal phase temperature range, a refractive index anisotropy, and a dielectric anisotropy comparable to those of the composition of Reference Example 6 were prepared and the physical property values of the compositions were measured. The results are shown in the following table.

VA liquid crystal display elements were prepared as in Example 1 by using the liquid crystal compositions of Reference Examples 7 and 8 and ghosting, drop marks, process compatibility, and low-temperature solubility were evaluated The results are shown in the same table.

[Table 9]

| Reference Example 7 | | | Reference Example 8 | |
|---|---|---|---|---|
| 3CyCy2 | 29.0% | | 3CyCy2 | 12.0% |
| 2CyPhPh5O2 | 7.0% | | 2CyPhPh5O2 | 7.0% |
| 3CyPhPh5O2 | 12.0% | | 3CyPhPh5O2 | 12.0% |
| 3PhPh5O2 | 13.0% | | 3PhPh5O2 | 13.0% |
| 3CyPh5O2 | 8.0% | | 3CyPh5O2 | 10.0% |

(continued)

| Reference Example 7 | | Reference Example 8 | |
|---|---|---|---|
| 3CyCyPh5O2 | 12.0% | 3CyCyPh5O2 | 12.0% |
| 4CyCyPh5O2 | 4.0% | 3CyCy4 | 12.0% |
| 3CyCyV1 | 10.0% | 3CyCy5 | 10.0% |
| 3CyCyPh1 | 5.0% | 3CyCyV1 | 10.0% |
| $T_{NI}$ / °C | 75.6 | 3CyCyPh1 | 2.0% |
| $\Delta n$ | 0.100 | $T_{NI}$ / °C | 75.8 |
| $n_o$ | 1.482 | $\Delta n$ | 0.099 |
| $\Delta\varepsilon$ | -3.6 | $n_o$ | 1.481 |
| $\varepsilon_\perp$ | 7.1 | $\Delta\varepsilon$ | -3.6 |
| $\eta$ / mPa·s | 16.1 | $\varepsilon_\perp$ | 6.9 |
| $\gamma_1$ / mPa·s | 108 | $\eta$ / mPa·s | 16.7 |
| $\gamma_1 / \Delta n^2$ | 10.8 | $\gamma_1$ / mPa·s | 108 |
| Initial VHR/% | 99.6 | $\gamma_1 / \Delta n^2$ | 11.0 |
| VHR after 1H at 150°C /% | 99.0 | Initial VHR/% | 99.7 |
| Ghosting evaluation | ◎ | VHR after 1H at 150°C /% | 99.0 |
| Drop mark evaluation | ◎ | Ghosting evaluation | ◎ |
| Process compatibility evaluation | ◎ | Drop mark evaluation | ◎ |
| Low-temperature solubility evaluation | ○ | Process compatibility evaluation | ◎ |
| | | Low-temperature solubility evaluation | ◎ |

The results show that the liquid crystal compositions of Reference Examples 7 and 8 have a liquid crystal phase temperature range practical for liquid crystal compositions for televisions, a dielectric anisotropy with a large absolute value, a low viscosity, and an optimum $\Delta n$. VA liquid crystal display elements illustrated in Fig. 1 were fabricated by using the liquid crystal compositions of Reference Examples 7 and 8 and ghosting, drop marks, process compatibility, and low-temperature solubility were evaluated by the aforementioned processes. The evaluation results were excellent.

(Reference Examples 9 and 10)

Liquid crystal compositions having compositions shown below and designed to have a liquid crystal phase temperature range, a refractive index anisotropy, and a dielectric anisotropy comparable to those of the compositions of Reference Examples 6 to 8 were prepared and the physical property values of the compositions were measured. The results are shown in the following table.

VA liquid crystal display elements were prepared as in Example 1 by using the liquid crystal compositions of Reference Examples 9 and 10. Ghosting, drop marks, process compatibility, and low-temperature solubility were evaluated. The results are shown in the same table.

[Table 10]

| Reference Example 9 | | Reference Example 10 | |
|---|---|---|---|
| 3CyCy2 | 20.0% | 3CyCy2 | 20.0% |
| 2CyPhPh5O2 | 12.0% | 2CyPhPh5O2 | 5.0% |
| 3CyPhPh5O2 | 12.0% | 3CyPhPh5O2 | 6.0% |
| 3PhPh5O2 | 7.0% | 3PhPh5O2 | 13.0% |
| 3CyPh5O2 | 12.0% | 3CyPh5O2 | 10.0% |

(continued)

| Reference Example 9 | | Reference Example 10 | |
|---|---|---|---|
| 3CyPh5O4 | 5.0% | 3CyCyPh5O2 | 12.0% |
| 3CyCyPh5O2 | 7.0% | 4CyCyPh5O2 | 8.0% |
| 3CyCy4 | 4.0% | 3CyCy4 | 3.0% |
| 3CyCy5 | 3.0% | 3CyCyV1 | 10.0% |
| 3CyCyV1 | 10.0% | 3CyPhO1 | 2.0% |
| 3CyCyPh1 | 8.0% | 3CyCyPh1 | 6.0% |
| $T_{NI}$ / °C | 75.6 | 3CyPhPh2 | 3.0% |
| $\Delta n$ | 0.101 | 5PhPh1 | 2.0% |
| $n_o$ | 1.482 | $T_{NI}$ / °C | 75.2 |
| $\Delta\varepsilon$ | -3.5 | $\Delta n$ | 0.101 |
| $\varepsilon_\perp$ | 7.0 | $n_o$ | 1.484 |
| $\eta$ / mPa·s | 17.4 | $\Delta\varepsilon$ | -3.6 |
| $\gamma_1$ / mPa·s | 112 | $\varepsilon_\perp$ | 7.0 |
| $\gamma_1 / \Delta n^2$ | 11.0 | $\eta$ / mPa·s | 17.2 |
| Initial VHR /% | 99.5 | $\gamma_1$ / mPa·s | 111 |
| VHR after 1H at 150°C /% | 99.1 | $\gamma_1 / \Delta n^2$ | 10.9 |
| Ghosting evaluation | ○ | Initial VHR /% | 99.6 |
| Drop mark evaluation | ○ | VHR after 1H at 150°C /% | 99.2 |
| Process compatibility evaluation | ◎ | Ghosting evaluation | ◎ |
| Low-temperature solubility evaluation | ◎ | Drop mark evaluation | ○ |
| | | Process compatibility evaluation | ○ |
| | | Low-temperature solubility evaluation | ◎ |

The results show that the liquid crystal compositions of Reference Examples 9 and 10 have a liquid crystal phase temperature range practical for liquid crystal compositions for televisions, a dielectric anisotropy with a large absolute value, a low viscosity, and an optimum $\Delta n$. VA liquid crystal display elements illustrated in Fig. 1 were fabricated by using the liquid crystal compositions of Reference Examples 9 and 10 and ghosting, drop marks, process compatibility, and low-temperature solubility were evaluated by the aforementioned processes. The evaluation results were excellent.

(Reference Example 11)

A liquid crystal composition having a composition shown below and designed to have a liquid crystal phase temperature range, a refractive index anisotropy, and a dielectric anisotropy comparable to those of the compositions of Reference Examples 6 to 10 were prepared and the physical property values of the compositions were measured. The results are shown in the following table.

A VA liquid crystal display element was prepared as in Example 1 by using the liquid crystal composition of Reference Example 11 and ghosting, drop marks, process compatibility, and low-temperature solubility were evaluated. The results are shown in the same table.

[Table 11]

| reference Example 11 | |
|---|---|
| 3CyCy2 | 23.0% |
| 2CyPhPh5O2 | 7.0% |

(continued)

| reference Example 11 | |
|---|---|
| 3CyPhPh5O2 | 11.0% |
| 3PhPh5O2 | 15.0% |
| 3CyPh5O2 | 8.0% |
| 3CyCyPh5O2 | 13.0% |
| 3CyCy4 | 11.0% |
| 3CyCy5 | 3.0% |
| 3CyCyPh1 | 9.0% |
| $T_{NI}$ / °C | 75.5 |
| $\Delta n$ | 0.100 |
| $n_o$ | 1.484 |
| $\Delta\varepsilon$ | -3.5 |
| $\varepsilon_\perp$ | 6.9 |
| $\eta$ / mPa s | 16.5 |
| $\gamma_1$ / mPa·s | 108 |
| $\gamma_1 / \Delta n^2$ | 10.8 |
| Initial VHR/% | 99.8 |
| VHR after 1H at 150°C /% | 99.4 |
| Ghosting evaluation | ◎ |
| Drop mark evaluation | ◎ |
| Process compatibility evaluation | ◎ |
| Low-temperature solubility evaluation | ◎ |

The results show that the liquid crystal composition of Reference Example 11 has a liquid crystal phase temperature range practical for liquid crystal compositions for televisions, a dielectric anisotropy with a large absolute value, a low viscosity, and an optimum $\Delta n$. A VA liquid crystal display element illustrated in Fig. 1 was fabricated by using the liquid crystal composition of Reference Example 11 and ghosting, drop marks, process compatibility, and low-temperature solubility were evaluated by the aforementioned processes. The evaluation results were excellent.

(Comparative Examples 7 and 8)

A liquid crystal composition (Comparative Example 7) shown below was designed and prepared so that the composition had a liquid crystal phase temperature range, a refractive index anisotropy, and a dielectric anisotropy comparable to those of the composition of Reference Example 11 without incorporation of compounds represented by formula (I). A liquid crystal composition (Comparative Example 8) shown below was designed and prepared so that the composition had a liquid crystal phase temperature range, a refractive index anisotropy, and a dielectric anisotropy comparable to those of the composition of Reference Example 11 without incorporation of compounds represented by formula (II-1). The physical property values of the liquid crystal compositions were measured. The results are shown in the following table.

[Table 12]

| Comparative Example 7 | | | Comparative Example 8 | |
|---|---|---|---|---|
| 2CyPhPh5O2 | 7.0% | | 3CyCy2 | 23.0% |
| 3CyPhPh5O2 | 11.0% | | 3PhPh5O2 | 15.0% |

(continued)

| Comparative Example 7 | | Comparative Example 8 | |
|---|---|---|---|
| 3PhPh5O2 | 4.0% | 3CyPh5O2 | 9.0% |
| 3CyPh5O2 | 15.0% | 3CyCyPh5O2 | 12.0% |
| 3CyPh5O4 | 8.0% | 3CyCyPh5O3 | 6.0% |
| 3CyCyPh5O2 | 9.0% | 4CyCyPh5O2 | 10.0% |
| 3CyCy4 | 12.0% | 5CyCyPh5O2 | 3.0% |
| 3CyCy5 | 3.0% | 3CyCy4 | 2.0% |
| 3CyCyPh1 | 8.0% | 3CyCyPh1 | 9.0% |
| 5CyCyV | 23.0% | 3CyPhPh2 | 5.0% |
| $T_{NI}$/°C | 75.3 | 5PhPh1 | 6.0% |
| $\Delta n$ | 0.100 | $T_{NI}$ / °C | 75.5 |
| $n_o$ | 1.479 | $\Delta n$ | 0.101 |
| $\Delta\varepsilon$ | -3.5 | $n_o$ | 1.487 |
| $\varepsilon_\perp$ | 7.0 | $\Delta\varepsilon$ | -3.5 |
| $\eta$ / mPa·s | 20.7 | $\varepsilon_\perp$ | 6.9 |
| $\gamma_1$ / mPa·s | 127 | $\eta$ / mPa·s | 19.1 |
| $\gamma_1 / \Delta n^2$ | 12.7 | $\gamma_1$ / mPa·s | 122 |
| Initial VHR/% | 98.7 | $\gamma_1 / \Delta n^2$ | 12.0 |
| VHR after 1H at 150°C /% | 97.1 | Initial VHR /% | 99.1 |
| Ghosting evaluation | × | VHR after 1H at 150°C /% | 97.6 |
| Drop mark evaluation | × | Ghosting evaluation | × |
| Process compatibility evaluation | Δ | Drop mark evaluation | Δ |
| Low-temperature solubility evaluation | Δ | Process compatibility evaluation | Δ |
| | | Low-temperature solubility evaluation | O |

It was shown that the liquid crystal composition (Comparative Example 7) not containing a compound represented by general formula (I) had a high viscosity η and a high rotational viscosity γ1 compared to the liquid crystal composition (Reference Example 11) that contained 23% of the compounds represented by general formula (I) although the liquid crystal phase temperature range, the refractive index anisotropy, and dielectric anisotropy were similar. Whereas the initial VHR in Comparative Example 3 was 98.7%, the VHR after the element was left at a high temperature of 150°C for 1 hour was 97.1% and this was poor compared to Reference Example 11. Process compatibility was evaluated and was found to be at a level where changes were not acceptable compared to Reference Example 11. Low-temperature solubility was evaluated and precipitation occurred faster than in Reference Example 11.

It was shown that the liquid crystal composition (Comparative Example 8) not containing a compound represented by general formula (II-1) had a high viscosity η and a high rotational viscosity γ1 compared to the liquid crystal composition (Reference Example 11) that contained 18% of the compounds represented by general formula (II-1) although the liquid crystal phase temperature range, the refractive index anisotropy, and dielectric anisotropy were similar. Whereas the initial VHR in Comparative Example 6 was 99.1%, the VHR after the element was left at a high temperature of 150°C for 1 hour was 97.6% and this was poor compared to Reference Example 11. Process compatibility was evaluated and was found to be at a level where changes were not acceptable compared to Reference Example 11. Low-temperature solubility was evaluated and precipitation occurred faster than in Reference Example 11.

(Comparative Example 9)

A liquid crystal composition (comparative Example 9) not containing a compound represented by general

formula (II-2) and designed to have a liquid crystal phase temperature range, refractive index anisotropy, and dielectric anisotropy comparable to those of the composition of Reference Example 11 was prepared and the physical property values of the composition were measured. The results are shown in the following table.

[Table 13]

| Comparative Example 9 | |
|---|---|
| 3CyCy2 | 23.0% |
| 2CyPhPh5O2 | 7.0% |
| 3CyPhPh5O2 | 11.0% |
| 3CyPh5O2 | 15.0% |
| 3CyPh5O4 | 5.5% |
| 3CyCyPh5O2 | 13.0% |
| 3CyCyPh5O3 | 5.0% |
| 4CyCyPh5O2 | 5.0% |
| 3CyCy4 | 2.0% |
| 3CyCyPh1 | 5.0% |
| 5PhPh1 | 8.5% |
| $T_{NI}$ / °C | 75.3 |
| $\Delta n$ | 0.100 |
| $n_o$ | 1.484 |
| $\Delta\varepsilon$ | -3.5 |
| $\varepsilon_\perp$ | 7.2 |
| $\eta$ / mPa·s | 23.4 |
| $\gamma_1$ / mPa·s | 146 |
| $\gamma_1 / \Delta n^2$ | 14.6 |
| Initial VHR/% | 99.2 |
| VHR after 1H at 150°C /% | 97.4 |
| Ghosting evaluation | × |
| Drop mark evaluation | Δ |
| Process compatibility evaluation | Δ |
| Low-temperature solubility evaluation | ○ |

It was shown that the liquid crystal composition (Comparative Example 9) not containing a compound represented by general formula (II-2) had a high viscosity $\eta$ and a high rotational viscosity $\gamma 1$ compared to the liquid crystal composition (Reference Example 11) that contained 15% by mass of the compounds represented by general formula (II-2) although the liquid crystal phase temperature range, the refractive index anisotropy, and dielectric anisotropy were similar. Whereas the initial VHR in Comparative Example 3 was 99.2%, the VHR after the element was left at a high temperature of 150°C for 1 hour was 97.4% and this was poor compared to Reference Example 11. Process compatibility was evaluated and was found to be at a level where changes were not acceptable compared to Reference Example 11. Low-temperature solubility was evaluated and precipitation occurred faster than in Reference Example 11.

(Reference Examples 12 and 13)

Liquid crystal compositions having compositions shown below and designed to have a liquid crystal phase temperature range, a refractive index anisotropy, and a dielectric anisotropy comparable to those of the composition of Reference Example 11 were prepared and the physical property values of the compositions were measured. The results

are shown in the following table.

VA liquid crystal display elements were prepared as in Example 1 by using the liquid crystal compositions of Reference Examples 12 and 13 and ghosting, drop marks, process compatibility, and low-temperature solubility were evaluated. The results are shown in the same table.

[Table 14]

| Reference Example 12 | | Reference Example 13 | |
|---|---|---|---|
| 3CyCy2 | 29.0% | 3CyCy2 | 12.0% |
| 2CyPhPh5O2 | 8.0% | 2CyPhPh5O2 | 6.0% |
| 3CyPhPh5O2 | 12.0% | 3CyPhPh5O2 | 12.0% |
| 3PhPh5O2 | 15.0% | 3PhPh5O2 | 10.0% |
| 3CyPh5O2 | 6.0% | 3CyPh5O2 | 10.0% |
| 3CyCyPh5O2 | 11.0% | 3CyPh5O4 | 6.0% |
| 4CyCyPh5O2 | 2.0% | 3CyCyPh5O2 | 11.0% |
| 3CyCy4 | 9.0% | 3CyCy4 | 12.0% |
| 3CyCyPh1 | 8.0% | 3CyCy5 | 10.0% |
| $T_{NI}$ / °C | 75.2 | 3CyCyPh1 | 9.0% |
| $\Delta n$ | 0.100 | 5PhPh1 | 2.0% |
| $n_o$ | 1.484 | $T_{NI}$ / °C | 75.5 |
| $\Delta\varepsilon$ | -3.5 | $\Delta n$ | 0.100 |
| $\varepsilon_\perp$ | 6.8 | $n_o$ | 1.483 |
| $\eta$ / mPa·s | 16.0 | $\Delta\varepsilon$ | -3.5 |
| $\gamma_1$ / mPa·s | 108 | $\varepsilon_\perp$ | 6.9 |
| $\gamma_1 / \Delta n^2$ | 10.8 | $\eta$ / mPa·s | 19.0 |
| Initial VHR/% | 99.6 | $\gamma_1$ / mPa·s | 120 |
| VHR after 1H at 150°C /% | 99.1 | $\gamma_1 / \Delta n^2$ | 12.0 |
| Ghosting evaluation | ○ | Initial VHR/% | 99.7 |
| Drop mark evaluation | ◎ | VHR after 1H at 150°C /% | 99.2 |
| Process compatibility evaluation | ◎ | Ghosting evaluation | ◎ |
| Low-temperature solubility evaluation | ○ | Drop mark evaluation | ◎ |
| | | Process compatibility evaluation | ◎ |
| | | Low-temperature solubility evaluation | ◎ |

The results show that the liquid crystal compositions of Reference Examples 12 and 13 have a liquid crystal phase temperature range practical for liquid crystal compositions for televisions, a dielectric anisotropy with a large absolute value, a low viscosity, and an optimum $\Delta n$. VA liquid crystal display elements illustrated in Fig. 1 were fabricated by using the liquid crystal compositions of Reference Examples 12 and 13 and ghosting, drop marks, process compatibility, and low-temperature solubility were evaluated by the aforementioned processes. The evaluation results were excellent.

(Reference Examples 14 and 15)

Liquid crystal compositions having compositions shown below and designed to have a liquid crystal phase temperature range, a refractive index anisotropy, and a dielectric anisotropy comparable to those of the compositions of Reference Examples 6 to 13 were prepared and the physical property values of the compositions were measured. The results are shown in the following table.

VA liquid crystal display elements were prepared as in Example 1 by using the liquid crystal compositions of

Reference Examples 14 and 15. Ghosting, drop marks, process compatibility, and low-temperature solubility were evaluated. The results are shown in the same table.

[Table 15]

| Reference Example 14 | | Reference Example 15 | |
|---|---|---|---|
| 3CyCy2 | 23.0% | 3CyCy2 | 23.0% |
| 2CyPhPh5O2 | 12.0% | 2CyPhPh5O2 | 5.0% |
| 3CyPhPh5O2 | 12.0% | 3CyPhPh5O2 | 6.0%, |
| 3PhPh5O2 | 9.0% | 3PhPh5O2 | 15.0% |
| 3CyPh5O2 | 12.0% | 3CyPh5O2 | 8.0% |
| 3CyPh5O4 | 3.0% | 3CyCyPh5O2 | 13.0% |
| 3CyCyPh5O2 | 7.0% | 4CyCyPh5O2 | 7.0% |
| 3CyCy4 | 11.0% | 3CyCy4 | 11.0% |
| 3CyCy5 | 1.0% | 3CyCyPh1 | 8.0% |
| 3CyCyPh1 | 10.0% | 3CyPhPh2 | 2.0% |
| $T_{NI}$ / °C | 75.1 | 5PhPh1 | 2.0% |
| $\Delta n$ | 0.100 | $T_{NI}$ / °C | 75.1 |
| $n_o$ | 1.483 | $\Delta n$ | 0.099 |
| $\Delta\varepsilon$ | -3.5 | $n_o$ | 1.485 |
| $\varepsilon_\perp$ | 7.0 | $\Delta\varepsilon$ | -3.5 |
| $\eta$ / mPa·s | 17.4 | $\varepsilon_\perp$ | 6.9 |
| $\gamma_1$ / mPa·s | 112 | $\eta$ / mPa·s | 17.0 |
| $\gamma_1 / \Delta n^2$ | 11.2 | $\gamma_1$ / mPa·s | 110 |
| Initial VHR/% | 99.8 | $\gamma_1 / \Delta n^2$ | 11.2 |
| VHR after 1H at 150°C /% | 99.1 | Initial VHR/% | 99.7 |
| Ghosting evaluation | ◎ | VHR after 1H at 150°C /% | 99.0 |
| Drop mark evaluation | ◎ | Ghosting evaluation | ○ |
| Process compatibility evaluation | ◎ | Drop mark evaluation | ◎ |
| Low-temperature solubility evaluation | ○ | Process compatibility evaluation | ◎ |
| | | Low-temperature solubility evaluation | ○ |

The results show that the liquid crystal compositions of Reference Examples 14 and 15 have a liquid crystal phase temperature range practical for liquid crystal compositions for televisions, a dielectric anisotropy with a large absolute value, a low viscosity, and an optimum $\Delta n$. VA liquid crystal display elements illustrated in Fig. 1 were fabricated by using the liquid crystal compositions of Reference Examples 14 and 15 and ghosting, drop marks, process compatibility, and low-temperature solubility were evaluated by the aforementioned processes. The evaluation results were excellent.

## Claims

1. A liquid crystal composition having negative dielectric anisotropy, comprising a compound represented by formula (I), two or more compounds represented by general formula (II), a compound represented by general formula (III), a compound represented by the formula (V), and the compound (VI-a4),
wherein the compounds represented by general formula (II) include one or more compounds with $n^1$ representing 0 and one or more compounds with $n^1$ representing 1,
wherein the compounds represented by general formula (II) include one or more compounds represented by general

formula (II-1) as the one or more compounds with $n^1$ representing 1 and one or more compounds represented by general formula (II-2) as the one or more compounds with $n^1$ representing 0:

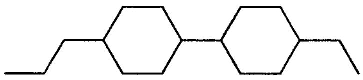 (I)

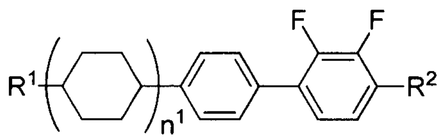 (II)

in the formula, $R^1$ and $R^2$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; and $n^1$ represents 0 or 1;

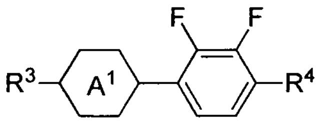 (III)

in the formula, $R^3$ represents an alkyl group having 1 to 8 carbon atoms, an alkenyl group having 2 to 8 carbon atoms, an alkoxy group having 1 to 8 carbon atoms, or an alkenyloxy group having 2 to 8 carbon atoms, $R^4$ represents an alkoxy group having 2 to 8 carbon atoms, and $A^1$ represents a 1,4-cyclohexylene group;

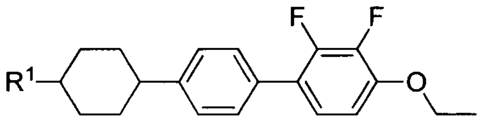 (II-1)

in the formula, $R^1$ is the same as $R^1$ in general formula (II);

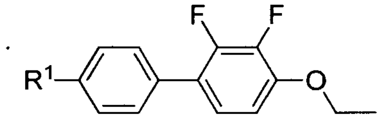 (II-2)

in the formula, $R^1$ is the same as $R^1$ in general formula (II);

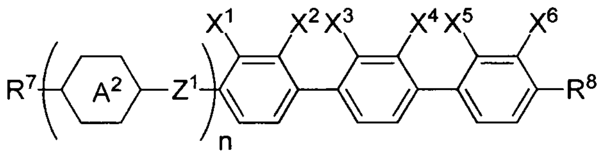 ( V )

in the formula, $R^7$ and $R^8$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; at least one hydrogen atom in the alkyl, alkenyl, alkoxy, and/or alkenyloxy group may be substituted with a fluorine atom; and a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively,

$A^2$ represents a 1,4-cyclohexylene group, a 1,4-phenylene group, or a tetrahydropyran-2,5-diyl group and when $A^2$ represents a 1,4-phenylene group, the 1,4-phenylene group may have at least one hydrogen atom substituted with a fluorine atom,

$Z^1$ represents a single bond, $-OCH_2-$, $-OCF_2-$, $-CH_2O-$, or$-CF_2O-$,

n represents 0 or 1, and

$X^1$ to $X^6$ each independently represent a hydrogen atom or a fluorine atom and at least one of $X^1$ to $X^6$ represents

a fluorine atom; and

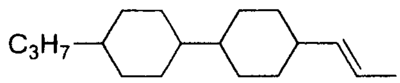 (VI-a4)

.

2. The liquid crystal composition according to Claim 1, comprising 20 to 40% by mass of the compounds represented by general formula (II).

3. The liquid crystal composition according to Claim 1, comprising a compound represented by general formula (IV)

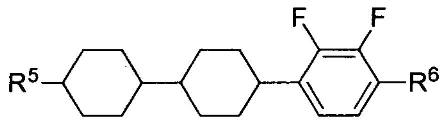 (IV)

in the formula, $R^5$ and $R^6$ each independently represent an alkyl group having 1 to 8 carbon atoms, an alkenyl group having 2 to 8 carbon atoms, an alkoxy group having 1 to 8 carbon atoms, or an alkenyloxy group having 2 to 8 carbon atoms; at least one hydrogen atom in the alkyl, alkenyl, alkoxy, and/or alkenyloxy group may be substituted with a fluorine atom; and a methylene group in the alkyl, alkenyl, alkoxy, and/or alkenyloxy group may be substituted with an oxygen atom as long as oxygen atoms are not bonded consecutively or with a carbonyl group as long as carbonyl groups are not bonded consecutively.

4. The liquid crystal composition according to Claim 1, comprising 2 to 30% by mass of the compound represented by general formula (IV) in Claim 3.

5. The liquid crystal composition according to Claim 1, comprising 2 to 30% by mass of the compound represented by general formula (IV) in Claim 3, and 2 to 30% by mass of the compound represented by general formula (V).

6. The liquid crystal composition according to Claim 1, comprising a reactive monomer.

7. A liquid crystal display element that uses the liquid crystal composition according to Claim 1.

8. A liquid crystal display element that uses the liquid crystal composition according to Claim 6.

9. A liquid crystal display that uses the liquid crystal display element according to Claim 7 or 8.

## Patentansprüche

1. Flüssigkristallzusammensetzung mit negativer dielektrischer Anisotropie, die eine Verbindung, dargestellt durch die Formel (I), zwei oder mehr Verbindungen, dargestellt durch die allgemeine Formel (II), eine Verbindung, dargestellt durch die allgemeine Formel (III), eine Verbindung, dargestellt durch die Formel (V), und die Verbindung (VI-a4) umfasst,
wobei die Verbindungen, die durch die allgemeine Formel (II) dargestellt sind, eine oder mehrere Verbindung (en), bei der/denen $n^1$ für 0 steht, und eine oder mehrere Verbindung (en), bei der/denen $n^1$ für 1 steht, umfassen,
wobei die Verbindungen, dargestellt durch die allgemeine Formel (II), eine oder mehrere Verbindung(en), dargestellt durch die allgemeine Formel (II-1), als die eine oder mehrere Verbindung(en), bei der/denen $n^1$ für 1 steht, und eine oder mehrere Verbindung(en), dargestellt durch die allgemeine Formel (II-2), als die eine oder mehrere Verbindung (en), bei der/denen $n^1$ für 0 steht, umfassen:

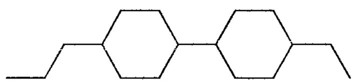 (I)

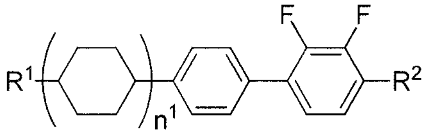

(II)

in der Formel stellen $R^1$ und $R^2$ jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen dar; und steht $n^1$ für 0 oder 1;

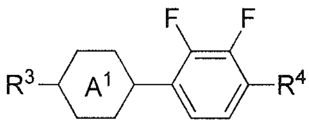

(III)

in der Formel stellt $R^3$ eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen dar, stellt $R^4$ eine Alkoxygruppe mit 2 bis 8 Kohlenstoffatomen dar und stellt $A^1$ eine 1,4-Cyclohexylengruppe dar;

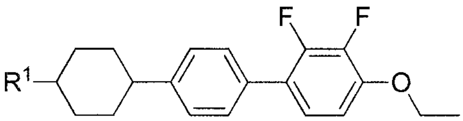

(II-1)

in der Formel ist $R^1$ das gleiche wie $R^1$ in der allgemeinen Formel (II);

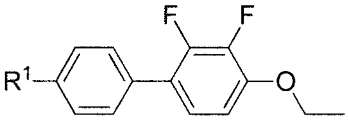

(II-2)

in der Formel ist $R^1$ das gleiche wie $R^1$ in der allgemeinen Formel (II);

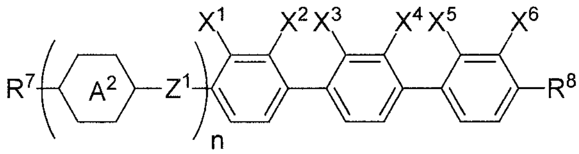

( V )

in der Formel stellen $R^7$ und $R^8$ jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen dar; kann mindestens ein Wasserstoffatom in der Alkyl-, Alkenyl-, Alkoxy- und/oder Alkenyloxygruppe durch ein Fluoratom ersetzt sein; und kann eine Methylengruppe in der Alkyl-, Alkenyl-, Alkoxy- und/oder Alkenyloxygruppe durch ein Sauerstoffatom, solange Sauerstoffatome nicht aufeinanderfolgend gebunden sind, oder durch eine Carbonylgruppe, solange Carbonylgruppen nicht aufeinanderfolgend gebunden sind, ersetzt sein,

stellt $A^2$ eine 1,4-Cyclohexylengruppe, eine 1,4-Phenylengruppe oder eine Tetrahydropyran-2,5-diylgruppe dar, und wenn $A^2$ eine 1,4-Phenylengruppe darstellt, kann in der 1,4-Phenylengruppe mindestens ein Wasserstoffatom durch ein Fluoratom ersetzt sein,

stellt $Z^1$ eine Einfachbindung, $-OCH_2-$, $-OCF_2-$, $-CH_2O-$ oder $-CF_2O-$ dar,

steht n für 0 oder 1 und

stellen $X^1$ bis $X^6$ jeweils unabhängig ein Wasserstoffatom oder ein Fluoratom dar und stellt mindestens eines von $X^1$ bis $X^6$ ein Fluoratom dar; und

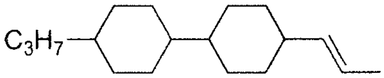

(VI-a4)

.

2. Flüssigkristallzusammensetzung gemäß Anspruch 1, die 20 bis 40 Massen-% der Verbindungen, dargestellt durch die allgemeine Formel (II), umfasst.

3. Flüssigkristallzusammensetzung gemäß Anspruch 1, die eine Verbindung, dargestellt durch die allgmeine Formel (IV), umfasst

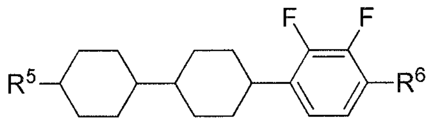

(IV)

in der Formel stellen $R^5$ und $R^6$ jeweils unabhängig eine Alkylgruppe mit 1 bis 8 Kohlenstoffatomen, eine Alkenylgruppe mit 2 bis 8 Kohlenstoffatomen, eine Alkoxygruppe mit 1 bis 8 Kohlenstoffatomen oder eine Alkenyloxygruppe mit 2 bis 8 Kohlenstoffatomen dar; kann mindestens ein Wasserstoffatom in der Alkyl-, Alkenyl-, Alkoxy- und/oder Alkenyloxygruppe durch ein Fluoratom ersetzt sein; und kann eine Methylengruppe in der Alkyl-, Alkenyl-, Alkoxy- und/oder Alkenyloxygruppe durch ein Sauerstoffatom, solange Sauerstoffatome nicht aufeinanderfolgend gebunden sin, oder durch eine Carbonylgruppe, solange Carbonylgruppen nicht aufeinanderfolgend gebunden sind, ersetzt sein.

4. Flüssigkristallzusammensetzung gemäß Anspruch 1, die 2 bis 30 Massen-% der Verbindung, dargestellt durch die allgemeine Formel (IV) in Anspruch 3, umfasst.

5. Flüssigkristallzusammensetzung gemäß Anspruch 1, die 2 bis 30 Massen-% der Verbindung, dargestellt durch die allgemeine Formel (IV) in Anspruch 3, und 2 bis 30 Massen-% der Verbindung, dargestellt durch die allgemeine Formel (V), umfasst.

6. Flüssigkristallzusammensetzung gemäß Anspruch 1, die ein reaktives Monomer umfasst.

7. Flüssigkristallanzeigeelement, das die Flüssigkristallzusammensetzung gemäß Anspruch 1 verwendet.

8. Flüssigkristallanzeigeelement, das die Flüssigkristallzusammensetzung gemäß Anspruch 6 verwendet.

9. Flüssigkristallanzeige, die das Flüssigkristallanzeigeelement gemäß Anspruch 7 oder 8 verwendet.

**Revendications**

1. Composition à base de cristaux liquides présentant une anisotropie diélectrique négative, comprenant un composé représenté par la formule (I), deux composés ou plus représentés par la formule générale (II), un composé représenté par la formule générale (III), un composé représenté par la formule (V), et le composé (VI-a4),
dans laquelle les composés représentés par la formule générale (II) comprennent un ou plusieurs composés avec $n^1$ représentant 0 et un ou plusieurs composés avec $n^1$ représentant 1,
dans laquelle les composés représentés par la formule générale (II) comprennent un ou plusieurs composés représentés par la formule générale (II-1) en tant qu'un ou plusieurs composés avec $n^1$ représentant 1 et un ou plusieurs composés représentés par la formule générale (II-2) en tant qu'un ou plusieurs composés avec $n^1$ représentant 0 :

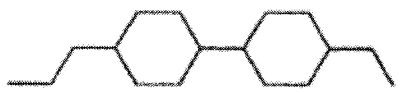

(I)

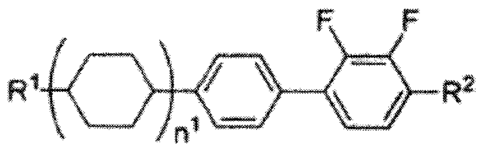

(II)

dans la formule, $R^1$ et $R^2$ représentent chacun indépendamment un groupe alkyle comportant 1 à 8 atomes de carbone, un groupe alcényle comportant 2 à 8 atomes de carbone, un groupe alcoxy comportant 1 à 8 atomes de

carbone, ou un groupe alcényloxy comportant 2 à 8 atomes de carbone ; et $n^1$ représente 0 ou 1 ;

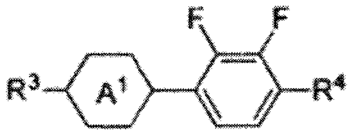

(III)

dans la formule, $R^3$ représente un groupe alkyle comportant 1 à 8 atomes de carbone, un groupe alcényle comportant 2 à 8 atomes de carbone, un groupe alcoxy comportant 1 à 8 atomes de carbone, ou un groupe alcényloxy comportant 2 à 8 atomes de carbone, $R^4$ représente un groupe alcoxy comportant 2 à 8 atomes de carbone, et $A^1$ représente un groupe 1,4-cyclohexylène ;

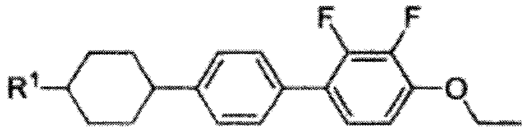

(II-1)

dans la formule, $R^1$ est identique à $R^1$ dans la formule générale (II) ;

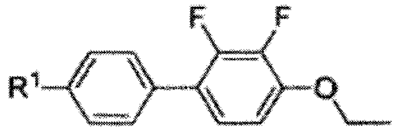

(II-2)

dans la formule, $R^1$ est identique à $R^1$ dans la formule générale (II) ;

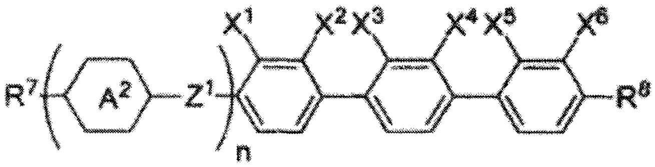

( V )

dans la formule, $R^7$ et $R^8$ représentent chacun indépendamment un groupe alkyle comportant 1 à 8 atomes de carbone, un groupe alcényle comportant 2 à 8 atomes de carbone, un groupe alcoxy comportant 1 à 8 atomes de carbone, ou un groupe alcényloxy comportant 2 à 8 atomes de carbone ; au moins un atome d'hydrogène dans le groupe alkyle, alcényle, alcoxy, et/ou alcényloxy peut être substitué par un atome de fluor ; et un groupe méthylène dans le groupe alkyle, alcényle, alcoxy, et/ou alcényloxy peut être substitué par un atome d'oxygène tant que les atomes d'oxygène ne sont pas liés consécutivement ou par un groupe carbonyle tant que les groupes carbonyle ne sont pas liés consécutivement,
$A^2$ représente un groupe 1,4-cyclohexylène, un groupe 1,4-phénylène, ou un groupe tétrahydropyrane-2,5-diyle et lorsque $A^2$ représente un groupe 1,4-phénylène, le groupe 1,4-phénylène peut avoir au moins un atome d'hydrogène substitué par un atome de fluor,
$Z^1$ représente une liaison simple, $-OCH_2-$, $-OCF_2-$,$-CH_2O-$, ou $-CF_2O-$,
n représente 0 ou 1, et
$X^1$ à $X^6$ représentent chacun indépendamment un atome d'hydrogène ou un atome de fluor et au moins l'un de $X^1$ à $X^6$ représente un atome de fluor ; et

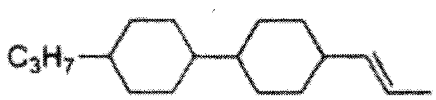

(VI-a4)

**2.** Composition à base de cristaux liquides selon la revendication 1, comprenant 20 à 40 % en masse des composés

représentés par la formule générale (II).

3. Composition à base de cristaux liquides selon la revendication 1, comprenant un composé représenté par la formule générale (IV)

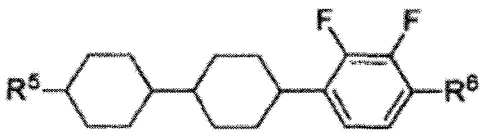

(IV)

dans la formule, $R^5$ et $R^6$ représentent chacun indépendamment un groupe alkyle comportant 1 à 8 atomes de carbone, un groupe alcényle comportant 2 à 8 atomes de carbone, un groupe alcoxy comportant 1 à 8 atomes de carbone, ou un groupe alcényloxy comportant 2 à 8 atomes de carbone ; au moins un atome d'hydrogène dans le groupe alkyle, alcényle, alcoxy, et/ou alcényloxy peut être substitué par un atome de fluor ; et un groupe méthylène dans le groupe alkyle, alcényle, alcoxy, et/ou alcényloxy peut être substitué par un atome d'oxygène tant que les atomes d'oxygène ne sont pas liés consécutivement ou par un groupe carbonyle tant que les groupes carbonyle ne sont pas liés consécutivement.

4. Composition à base de cristaux liquides selon la revendication 1, comprenant 2 à 30 % en masse du composé représenté par la formule générale (IV) dans la revendication 3.

5. Composition à base de cristaux liquides selon la revendication 1, comprenant 2 à 30 % en masse du composé représenté par la formule générale (IV) dans la revendication 3, et 2 à 30 % en masse du composé représenté par la formule générale (V).

6. Composition à base de cristaux liquides selon la revendication 1, comprenant un monomère réactif.

7. Elément d'affichage à base de cristaux liquides qui utilise la composition à base de cristaux liquides selon la revendication 1.

8. Elément d'affichage à base de cristaux liquides qui utilise la composition à base de cristaux liquides selon la revendication 6.

9. Affichage à base de cristaux liquides qui utilise l'élément d'affichage à base de cristaux liquides selon la revendication 7 ou 8.

FIG. 1

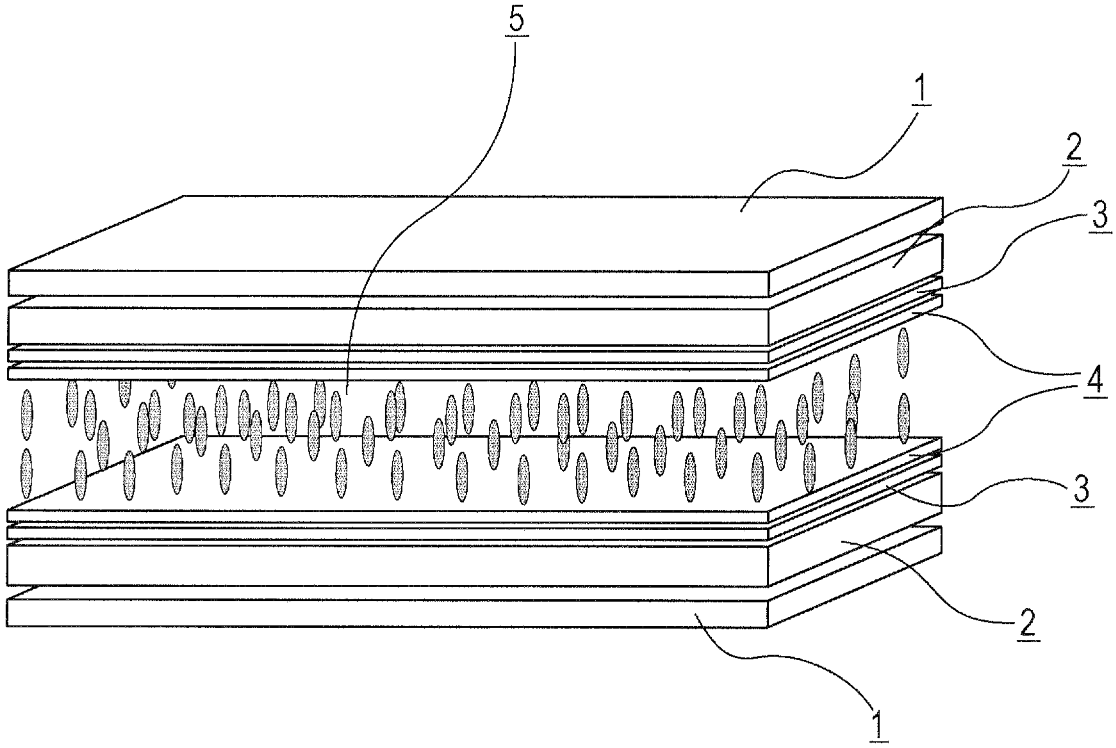


FIG. 2

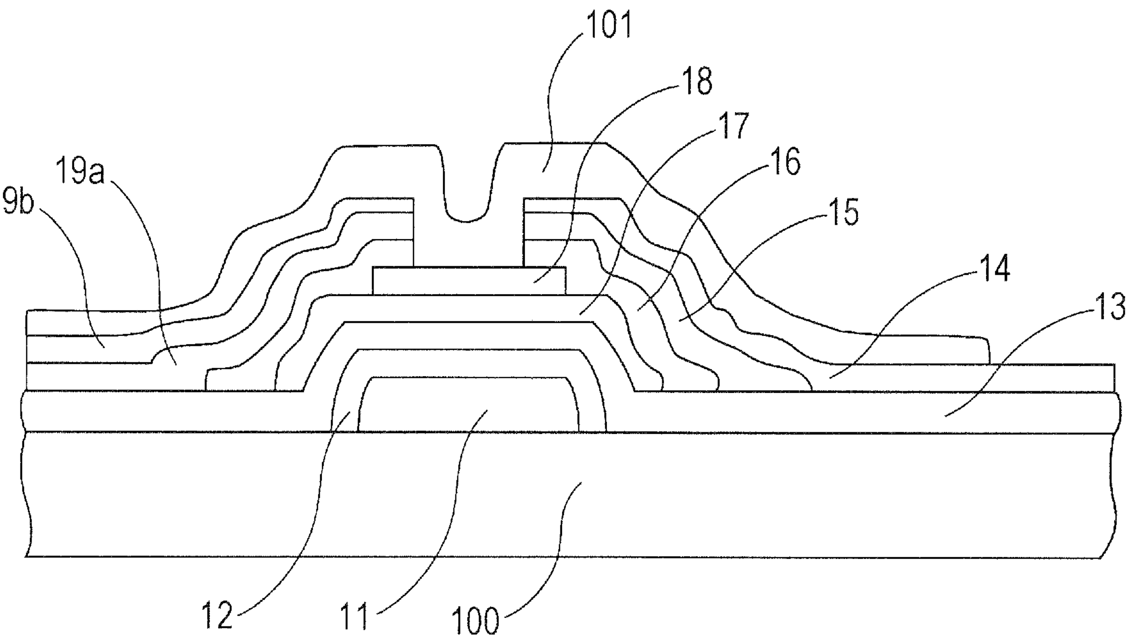

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008505235 W
- JP 6235925 A
- JP 2002357830 A
- JP 2006058755 A
- WO 2011148928 A1
- JP 2009084362 A
- JP 2013047327 A
- EP 2824161 A1
- EP 2855628 A1
- EP 2871225 A1
- EP 2607451 A1
- EP 2931836 A1